(19) Europäisches Patentamt
European Patent Office
Office européen des brevets

(11) **EP 4 665 040 A1**

(12) **EUROPEAN PATENT APPLICATION**
published in accordance with Art. 153(4) EPC

(43) Date of publication:
**17.12.2025 Bulletin 2025/51**

(21) Application number: **23922515.4**

(22) Date of filing: **21.12.2023**

(51) International Patent Classification (IPC):
***H04W 72/0446*** (2023.01)

(52) Cooperative Patent Classification (CPC):
**H04B 7/06; H04B 7/08; H04W 72/02;
H04W 72/044; H04W 72/0446; H04W 72/40;
H04W 72/53**

(86) International application number:
**PCT/CN2023/140700**

(87) International publication number:
**WO 2024/169400 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2023 CN 202310188787**

(71) Applicant: **Huawei Technologies Co., Ltd.
Shenzhen, Guangdong 518129 (CN)**

(72) Inventors:
• **XU, Jiaojiao
  Shenzhen, Guangdong 518129 (CN)**
• **QI, Hong
  Shenzhen, Guangdong 518129 (CN)**
• **ZHANG, Yi
  Shenzhen, Guangdong 518129 (CN)**
• **SU, Hongjia
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SIDELINK BEAM TRAINING METHOD AND APPARATUS**

(57) Embodiments of this application provide a sidelink beam training method and apparatus. The method includes: determining K first occasions, where each of the K first occasions includes P time units, the P time units include N sending time units, K, P, and N are all positive integers greater than 1, and N is less than or equal to P; determining a first target occasion from the K first occasions; and sending N first beams in the N sending time units of the first target occasion, where the N first beams carry a first sidelink signal, and the first sidelink signal is used for beam training. According to the foregoing method, reliability and effectiveness of sidelink beam training can be improved.

```
┌─────────────────────────────────────────────────────────────┐
│ Determine K first occasions, where each of the K first       │
│ occasions includes P time units, the P time units include    │⌒ S1210
│ N sending time units, K, P, and N are all positive integers  │
│ greater than 1, and N is less than or equal to P             │
└─────────────────────────────────────────────────────────────┘
                              │
                              ▼
┌─────────────────────────────────────────────────────────────┐
│ Determine a first target occasion from the K first occasions │⌒ S1220
└─────────────────────────────────────────────────────────────┘
                              │
                              ▼
┌─────────────────────────────────────────────────────────────┐
│ Send N first beams in the N sending time units of the first  │
│ target occasion, where the N first beams carry a first       │⌒ S1230
│ sidelink signal, and the first sidelink signal is used for   │
│ beam training                                                │
└─────────────────────────────────────────────────────────────┘
```

FIG. 12

## Description

This application claims priority to Chinese Patent Application No. 202310188787.8, filed with the China National Intellectual Property Administration on February 17, 2023 and entitled "SIDELINK BEAM TRAINING METHOD AND APPARATUS", which is incorporated herein by reference in its entirety.

## TECHNICAL FIELD

This application relates to the communication field, and specifically, to a sidelink beam training method and apparatus.

## BACKGROUND

Over the past decades, wireless communication has undergone evolution of technologies from a first-generation analog communication system to a new radio (new radio, NR) system. In this complex evolution process, beamforming based on multiple-input multiple-output (multiple-input multiple-output, MIMO) is an important technology. The beamforming may be considered as a spatial filtering process. A technical principle of the beamforming is to limit signal sending or receiving within a specific angle range, to increase a gain and reduce interference. In an NR system, beamforming becomes more important. The beamforming is not only an important method for improving spectral efficiency, but also an important support for using a frequency range 2 (Frequency Range 2, FR 2) above 6 GHz. To efficiently and properly perform beamforming, a beam management (beam management, BM) process is designed in the NR system.

Existing beam management is an important technology proposed for beamforming of the FR 2 in the NR system. In an existing beam management process, a next-generation NodeB (next-generation NodeB, gNB) configures, for a user equipment (user equipment, UE), a time domain resource used for beam training, and the gNB and the UE obtain and maintain, by using the time domain resource, a beam set used for sending and receiving. However, in a sidelink (sidelink, SL) scenario, both a transmit end and a receive end are terminal devices. When the transmit end sends a beam, the receive end may be communicating with another device. Consequently, reliability and effectiveness of beam training are reduced.

## SUMMARY

Embodiments of this application provide a sidelink beam training method and apparatus, a terminal device, a computer-readable storage medium, and a computer program product, so that reliability and effectiveness of sidelink beam training can be improved.

According to a first aspect, a sidelink beam training method is provided. The method includes: determining K first occasions, where each of the K first occasions includes P time units, the P time units include N sending time units, the N sending time units are used to send a sidelink signal, K, P, and N are all positive integers greater than 1, and N is less than or equal to P; determining a first target occasion from the K first occasions; and sending N first beams in the N sending time units of the first target occasion, where the N first beams carry a first sidelink signal, and the first sidelink signal is used for beam training.

The K first occasions may be time domain resources configured or pre-configured by a network device by using a resource pool, or predefined by a terminal device. A specific manner of determining the K first occasions by the terminal device is not limited in this application. A transmit end and a receive end of a sidelink have consistent understanding of time domain positions of the K first occasions. When a first terminal device sends the N first beams in the N sending time units of the first target occasion, the receive end correspondingly receives the N first beams, and performs beam training based on the first sidelink signal in the N first beams, so that reliability and effectiveness of sidelink beam training can be improved.

Optionally, determining the first target occasion from the K first occasions includes: determining at least one unoccupied first occasion from the K first occasions; and determining the first target occasion from the at least one unoccupied first occasion.

Because a transmission resource of the sidelink needs to be selected and used by using a resource, a part of first occasions in the K first occasions may be occupied, and the first terminal device first determines, in a perception manner, an unoccupied first occasion, and then determines the first target occasion from the unoccupied first occasion, so that a probability that reliability and effectiveness of beam training are reduced due to a resource conflict can be reduced.

Optionally, when the K first occasions include Q occupied first occasions, an overlapping quantity of N sending time units of the first target occasion and an overlapping quantity of N sending time units of any one of the Q occupied first occasions are less than or equal to a first threshold, the first threshold is a positive integer greater than 1 and less than N, Q is a positive integer, and Q is less than K.

When there is the at least one unoccupied first occasion, the first terminal device may select, from the at least one unoccupied first occasion, a first occasion whose overlapping quantity is less than or equal to the first threshold, and a probability that a resource conflict occurs between the first occasion whose overlapping quantity is less than or equal to the first threshold and the occupied first occasion is low, so that using the first occasion as the first target occasion can reduce a probability that reliability and effectiveness of beam training are reduced due to the resource conflict.

Optionally, determining the first target occasion from the at least one unoccupied first occasion includes: determining an average value of an overlapping quantity of the at least one unoccupied first occasion, where the average value of the overlapping quantity is an average value of an overlapping quantity of sending time units of any unoccupied first occasion in the at least one unoccupied first occasion and overlapping quantities of sending time units of all occupied first occasions; and determining a first occasion corresponding to a minimum value of the average value of the overlapping quantity as the first target occasion.

When there is the at least one unoccupied first occasion, the first terminal device may calculate the average value of the overlapping quantity of the at least one unoccupied first occasion, and a probability that a resource conflict occurs between a first occasion with a smallest average value of an overlapping quantity and the occupied first occasion is lowest, so that using the first occasion with the smallest average value of the overlapping quantity as the first target occasion can reduce a probability that reliability and effectiveness of beam training are reduced due to the resource conflict.

Optionally, the P time units include M candidate time units, the N sending time units belong to the M candidate time units, P is greater than or equal to M, and M is greater than or equal to N.

The P time units in the first occasion include the M candidate time units, so that positions of the N sending time units can have larger selection space. For example, the network device may configure more first occasions based on positions of the M candidate time units, to be capable of adapting to more beam training scenarios. In addition, in this implementation, a beam training latency is limited to a maximum of M candidate time units, thereby reducing the beam training latency.

Optionally, when M is greater than N, and the N sending time units include continuous sending time units, a quantity of continuous sending time units is less than or equal to a second threshold, and the second threshold is a positive integer greater than 1 and less than N.

When the N sending time units are discrete time units, the N sending time units may also include the continuous sending time units, and the quantity of continuous sending time units is less than or equal to the second threshold, so that loss of continuous beams in some time periods in which communication link quality is poor can be avoided, and reliability and effectiveness of beam training can be improved.

Optionally, sending the N first beams in the N sending time units of the first target occasion includes: sending the N first beams in the N sending time units of the first target occasion in a first beam training period; and the method further includes: determining a second target occasion from the K first occasions, where N sending time units of the second target occasion are different from the N sending time units of the first target occasion; and sending N second beams in the N sending time units of the second target occasion in a second beam training period, where the N second beams carry a second sidelink signal, and the second sidelink signal is used for beam training.

Because a plurality of terminal devices may simultaneously select the first target occasion, the N sending time units of the first terminal device in the first beam training period may conflict with sending time units of another terminal device, and the first terminal device selects another first occasion in the second beam training period as the second target occasion, so that a probability of a resource conflict in the second beam training period can be reduced, thereby improving reliability and effectiveness of beam training.

According to a second aspect, a sidelink beam training apparatus is provided. The apparatus may be a communication device (for example, a terminal device), or may be a chip in the communication device. The apparatus may include a processing unit and a transceiver unit. When the apparatus is the communication device, the processing unit may be a processor, and the transceiver unit may be a transceiver. The communication device may further include a storage unit, and the storage unit may be a memory. The storage unit is configured to store instructions, and the processing unit is configured to execute the instructions stored in the storage unit, to enable the communication device to perform the method according to any one of the first aspect and the optional implementations of the first aspect. When the apparatus is the chip in the communication device, the processing unit may be a processor, and the transceiver unit may be an input/output interface, a pin, a circuit, or the like. The processing unit is configured to execute instructions stored in a storage unit, to enable the communication device to perform the method according to any one of the first aspect and the optional implementations of the first aspect. The storage unit may be a storage unit (for example, a register or a cache) in the chip, or may be a storage unit (for example, a read-only memory or a random access memory) that is in the communication device and that is located outside the chip.

According to a third aspect, a communication system is provided. The communication system includes the sidelink beam training apparatus according to the second aspect.

According to a fourth aspect, a computer-readable storage medium is provided. The computer-readable storage medium stores a computer program; and when the computer program is executed on a computer, the computer is enabled to perform the method according to any one of the first aspect and the optional implementations of the first aspect.

According to a fifth aspect, a computer program product is provided. The computer program product includes computer program code or computer program instructions; and when the computer program code or the computer program instructions are run by a sidelink beam training apparatus, the apparatus is enabled to perform the method according to any one of the first aspect and the optional implementations of the first aspect.

**BRIEF DESCRIPTION OF DRAWINGS**

FIG. 1 is a diagram of a vehicle-to-everything (vehicle-to-everything, V2X) scenario;
FIG. 2 is a diagram of a time domain resource pool applicable to this application;
FIG. 3 is a diagram of a sidelink resource configuration applicable to this application;
FIG. 4 is a diagram of a resource reservation procedure according to an embodiment of this application;
FIG. 5 is a diagram of a time domain position of sidelink synchronization signal block (sidelink synchronization signal block, S-SSB) transmission according to an embodiment of this application;
FIG. 6 is a diagram of a time domain position of S-SSB transmission according to an embodiment of this application;
FIG. 7 is a diagram of beam training according to an embodiment of this application;
FIG. 8 is another diagram of beam training according to an embodiment of this application;
FIG. 9 is a diagram of a terminal half-duplex problem;
FIG. 10 is a diagram of a problem existing in sidelink beam training;
FIG. 11 is a diagram of an application scenario according to an embodiment of this application;
FIG. 12 is a diagram of a sidelink beam training method according to an embodiment of this application;
FIG. 13 is a diagram of a time domain structure of a first occasion including N discrete sending time units according to an embodiment of this application;
FIG. 14 is a diagram of a time domain structure of a first occasion including N continuous sending time units according to an embodiment of this application;
FIG. 15 is a diagram of another sidelink beam training method according to an embodiment of this application;
FIG. 16 is a diagram of a method for performing beam training by using a plurality of beam training periods according to an embodiment of this application;
FIG. 17 is a diagram of a structure of a sidelink beam training apparatus according to an embodiment of this application;
FIG. 18 is a diagram of a structure of a terminal device according to an embodiment of this application; and
FIG. 19 is a diagram of a chip system according to an embodiment of this application.

**DESCRIPTION OF EMBODIMENTS**

The following describes technical solutions of this application with reference to accompanying drawings.
To facilitate understanding of the technical solutions of this application, concepts in this application are first briefly described.

1. V2X.

V2X uses and enhances current cellular network functions and elements, and can implement low-latency and high-reliability communication between various nodes in a vehicle network. As a cellular system evolves from long term evolution (long term evolution, LTE) to new radio NR, V2X also evolves from LTE-V2X to NR-V2X. NR-V2X can support lower transmission latency, more reliable communication transmission, and higher throughput, provide better user experience, and meet requirements of more application scenarios.
Based on the V2X technology, a UE can send some information of the UE to a surrounding UE, for example, periodic information such as a position, a speed, and an intention (turning, paralleling, and reversing), and some information triggered by an aperiodic event. Similarly, the UE also receives information of the surrounding UE in real time.

1.1. V2X system.

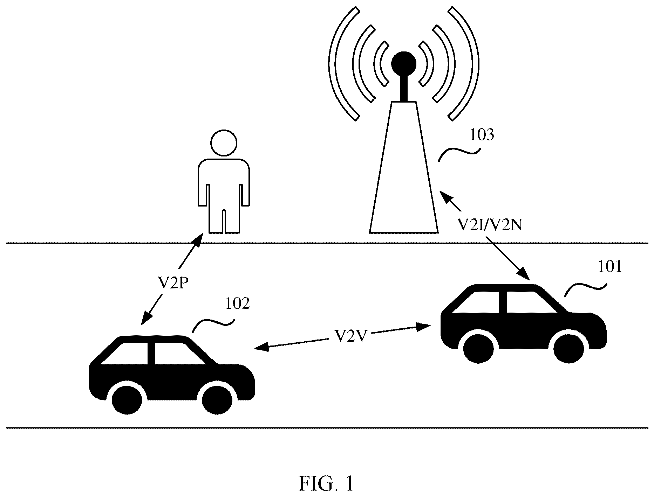

As shown in FIG. 1, the V2X system includes a vehicle 101, a vehicle 102, and a base station 103. Communication between the vehicle 101 and the vehicle 102 is referred to as vehicle-to-vehicle (vehicle-to-vehicle, V2V) communication. Communication between the vehicle 101 and the base station 103 is referred to as vehicle-to-infrastructure (vehicle-to-infrastructure, V2I) communication or vehicle-to-network (vehicle-to-network, V2N) communication. A behavior that the vehicle 102 senses a pedestrian or communication between the vehicle 102 and a terminal device used by a pedestrian is referred to as vehicle to pedestrian (vehicle to pedestrian, V2P) communication.

A communication link between the vehicle 101 and the base station 103 is referred to as an uplink or a downlink, and a communication link between the vehicle 101 and the vehicle 102 is referred to as a sidelink. Transmission resources of the sidelink need to be used through contention, and transmission resources reserved by different vehicles have a collision risk. In this case, the resources of the sidelink need to be configured.

1.2. Resource selection in the V2X system.

A communication interface between the vehicle 101 and the vehicle 102 is referred to as a proximity communication (proximity communication, PC) 5 interface. In the 3rd generation partnership project (3rd generation partnership project, 3GPP) release 16 (Rel-16), two resource assignment modes: a mode 1 and a mode 2, of the PC5 interface are defined.
In the mode 1, the base station schedules a sidelink resource to the UE.
In the mode 2, the UE autonomously determines a sidelink resource that is pre-configured or is configured by the base station.
In the mode 1, the base station assigns a transmission resource to the UE through a radio access network and a user equipment (UTRAN-to-UE, Uu) air interface. Therefore, the UE in the mode 1 needs to be in network coverage. In sidelink communication, the mode 1 and the mode 2 may be assigned with different resource pools, or may share a resource pool. Resource pool sharing can improve resource utilization efficiency, but a resource conflict problem easily occurs between the mode 1 and the mode 2. Therefore, the UE in the mode 1 notifies the UE in the mode 2 of the assigned resource.
In the network coverage, the UE may obtain SL resource pool (resource pool) configuration information and/or SL bandwidth part (bandwidth part, BWP) configuration information by receiving a system information block (system information block, SIB) of the network device, cell-specific (cell-specific) radio resource control (radio resource control, RRC) signaling, or UE-specific (UE-specific) RRC signaling. Alternatively, the UE may use pre-configured SL resource pool configuration information or SL BWP configuration information, for example, when there is no network coverage. The SL resource pool configuration information includes resource pool resource information, and the resource pool resource information indicates an SL resource pool.
The resource pool is a set of time-frequency resources for sidelink communication between UEs. The resource pool may include a code domain resource. Resources in the resource pool include resources used by the UE to send and receive at least one of the following physical channels:

a physical sidelink control channel (physical sidelink control channel, PSCCH), used to carry sidelink control information (sidelink control information, SCI);
a physical sidelink shared channel (physical sidelink shared channel, PSSCH), used to carry sidelink data and some sidelink control information;
a physical sidelink discovery channel (physical sidelink discovery channel, PSDCH), used to carry a sidelink discovery message;
a physical sidelink feedback channel (physical sidelink feedback channel, PSFCH), used to carry sidelink feedback information, where the sidelink feedback information may include an acknowledgment (acknowledgment, ACK) or a negative acknowledgment (negative acknowledgment, NACK), may further include channel state information (channel state information, CSI) feedback information, and may further include at least one type of the following assistance information: energy-saving information, a resource recommended for use, a resource not recommended for use, a resource collision, a resource reservation conflict, a half-duplex collision that has occurred in the past or is about to occur in the future, and the like; and
a physical sidelink broadcast channel (physical sidelink broadcast channel, PSBCH), used to carry information related to sidelink synchronization, where a service type carried by the PSBCH may include at least one of unicast, multicast, and broadcast.

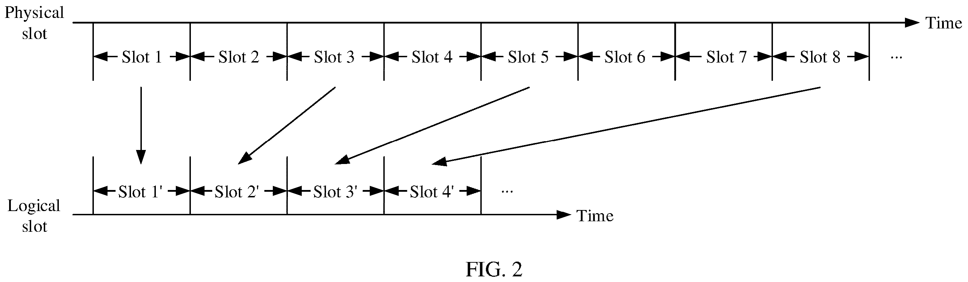

In time domain, the SL resource pool includes one or more time units. The time unit may be one of the following definitions: one or more symbols, one or more slots (slots), one or more mini-slots (mini-slots), one or more subframes, and one or more frames. The one or more time units may be continuous or discrete in terms of time. It should be understood that time domain units in one resource pool are logically continuous. In this application, for understanding of definitions of a symbol, a mini-slot, a slot, a subframe, and a frame, refer to 3GPP TS 38.211.
As shown in FIG. 2, a slot 1 to a slot 8 are continuous slots in terms of time, and the slot is referred to as a physical slot (physical slot). If the slot 1, the slot 3, the slot 5, and the slot 8 in the physical slots are configured as slots that belong to one resource pool, the slot 1, the slot 3, the slot 5, and the slot 8 correspond to a slot 1', a slot 2', a slot 3', and a slot 4' in the resource pool. From a perspective of the physical slot, the slot 1', the slot 2', the slot 3', and the slot 4' are discontinuous. From a perspective of the resource pool, the slot 1', the slot 2', the slot 3', and the slot 4' are continuous. These slots that are logically continuous but not necessarily continuous in time are referred to as logical slots (logical slots).

In frequency domain, the SL resource pool includes one or more frequency domain units. The frequency domain unit may be one resource element (resource element, RE), a plurality of REs, one resource block (resource block, RB), a plurality of RBs, one sub-channel (sub-channel), or a plurality of sub-channels. One sub-channel may include one or more continuous (continuous) or interlaced (interlaced) RBs in frequency domain, and a quantity of RBs may be an integer such as 10, 12, 15, 20, 25, or 50.

The SL resource pool configuration information may further include PSCCH configuration information. The PSCCH configuration information includes a quantity of symbols occupied by a PSCCH in one slot and a quantity of RBs occupied by a PSCCH in one sub-channel.

The SL BWP configuration information may include SL resource pool information that is used to configure a quantity of resource pools included in a BWP. The SL BWP configuration information may include SL bandwidth information that indicates a bandwidth for SL communication, for example, indicates that an SL bandwidth is 20 megahertz (MHz).

The SL BWP configuration information may further include SL symbol information that indicates a start SL symbol position in one slot and a quantity of occupied continuous SL symbols. The SL BWP configuration information may further include information about a subcarrier spacing and a cyclic prefix that are of an SL, and the information indicates a subcarrier spacing and a cyclic prefix that are used for SL communication. The cyclic prefix indicates an extended cyclic prefix or a normal cyclic prefix. In a possible configuration, the SL BWP configuration information may further include the SL resource pool configuration information. In this application, unless a meaning of the time unit is specially specified, a slot is used for description, but the time unit is not limited to only a slot. Unless a meaning of a time/frequency domain unit is specially specified, a sub-channel is used for description, but the frequency domain unit is not limited to only a sub-channel.

1.3. Sidelink resource selection.

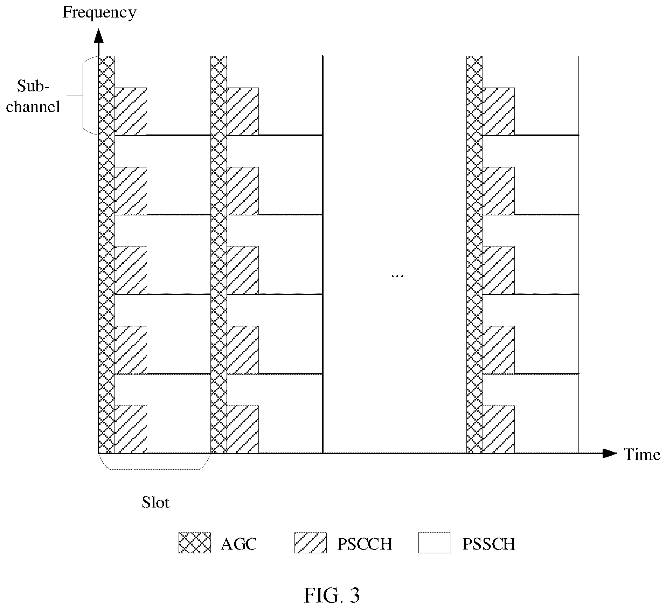

As shown in FIG. 3, a part of symbols in one slot are used for automatic gain control (automatic gain control, AGC), and remaining symbols are occupied by the PSCCH and the PSSCH.

SCI of an NR sidelink is divided into first-stage SCI and second-stage SCI. The PSCCH carries the first-stage SCI. The first-stage SCI is used to schedule the second-stage SCI and the PSSCH. Because the SL is a distributed system, all UEs need to correctly decode the first-stage SCI before decoding the second-stage SCI and the PSSCH. However, to reduce complexity of blind detection (blind decoding) performed by the UE on the PSCCH, a resource position of the PSCCH is relatively fixed, and format information of the carried first-stage SCI is also relatively unique. In other words, the UE does not need to blindly detect a time-frequency resource position of the PSCCH, and also does not need to blindly detect SCI in different formats, and the UE only needs to detect, at a fixed time-frequency resource position of the PSCCH, whether there is the first-stage SCI. There may be a PSCCH on each sub-channel in each slot. To be specific, a time domain start position of one PSCCH is a $2^{nd}$ symbol used for SL transmission in each slot, and a length is two or three symbols (determined by the resource pool configuration information). A frequency domain position is a smallest index of a physical resource block (physical resource block, PRB) of each sub-channel, and a length is at least 10 PRBs (determined by the resource pool configuration information), but does not exceed a size of the sub-channel.

A *Frequency resource assignment* field and a *Time resource assignment* field in the first-stage SCI respectively indicate a frequency domain resource and a time domain resource for transmitting the PSSCH. A *Resource reservation period* field indicates that a resource for transmitting the PSSCH is periodically reserved. A value of the *Resource reservation period* field is configured by the network device or pre-configured, or predefined. For example, the value is indicated by using first RRC signaling, and the first RRC signaling may be determined by *sl-ResourceReservePeriod1*. A format of the second-stage SCI is indicated by a second-stage SCI format (2nd-stage SCI format) field in the first-stage SCI. An existing second-stage SCI format field is shown in Table 1.

Table 1

| Second-stage SCI format field value | Second-stage SCI format |
|---|---|
| 00 | SCI format 2-A |
| 01 | SCI format 2-B |
| 10 | SCI format 2-C |
| 11 | Reserved |

The second-stage SCI format field is transmitted in the PSSCH, and carries related control information required for decoding the PSSCH, for example, hybrid automatic repeat request (hybrid automatic repeat request, HARQ) related information, CSI related information, position information, and a communication distance. The first-stage SCI may flexibly indicate a format and a size of an occupied resource (used to adjust a bit rate of the second-stage SCI) of the second-stage SCI.

1.4. Sidelink resource reservation.

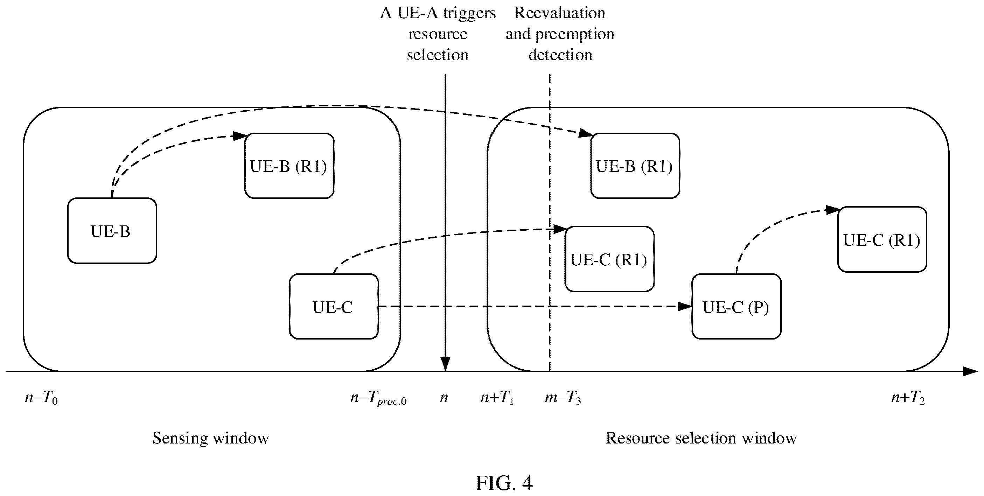

As shown in FIG. 4, a resource reservation (sensing selection) procedure may include the following steps.

Step 1: The terminal device determines a candidate resource $R_{x,y}$ in units of one slot and $L_{subCH}$ continuous sub-channels and a resource selection window $[n+T_1, n+T_2]$, where $0 \leq T_1 \leq T_{proc,1}^{SL}$, $T_{proc,1}^{SL}$ is determined in Table 2, $\mu_{SL}$ in Table 2 is a configured subcarrier spacing, and $T_1$ is selected based on implementation. If $T_{2min}$ (configured by a higher layer) is less than a remaining packet delay budget (packet delay budget, PDB), $T_{2min} \leq T_2 \leq PDB$, and $T_2$ is selected based on implementation; otherwise, $T_2$ is less than or equal to the PDB.

Table 2

| $\mu_{SL}$ | $T_{proc,1}^{SL}$ (slot) |
|---|---|
| 0 | 3 |
| 1 | 5 |
| 2 | 9 |
| 3 | 17 |

Step 2: Determine a sensing window $\left[ n - T_0, n - T_{proc,0}^{SL} \right)$, where $T_0$ is configured by using a higher layer parameter, and $T_{proc,0}^{SL}$ is determined in Table 3.

Table 3

| $\mu_{SL}$ | $T_{proc,0}^{SL}$ (slot) |
|---|---|
| 0 | 1 |
| 1 | 1 |
| 2 | 2 |
| 3 | 4 |

Step 3: Determine a reference signal received power (reference signal received power, RSRP) threshold $Th(p_i, p_j)$, where $Th(p_i, p_j)$ and a priority $prio_{TX}$ of to-be-sent data are both related to a priority $prio_{RX}$ indicated by received SCI, and $Th(p_i, p_j)$ is a $(prio_{RX} - (prio_{TX} - 1)*8)^{th}$ threshold in an RSRP threshold set configured in the resource pool.

Step 4: Initialize an available resource set $S_A$, where $S_A$ includes all time-frequency resources in the resource selection window.

Step 5: Exclude, from $S_A$, the following time-frequency resources: time frequency resources, in reserved slots, that are of all period resources configured in the resource pool and that correspond to slots (sending slots) that are not sensed and that are in the sensing window.

Step 5a: If a quantity of time-frequency resources excluded from $S_A$ is less than X% of total resources in the resource selection window, perform step 4 again, and skip step 5.

Step 6: Continue to exclude, from $S_A$, the following time-frequency resource: in time-frequency resources (including a retransmission resource and a periodically reserved resource) reserved by successfully decoded first-state SCI, a time-frequency resource, in the resource selection window, whose RSRP measurement result of a PSSCH demodulation reference signal (demodulation reference signal, DMRS) is greater than the RSRP threshold determined in step 3.

Step 7: If a quantity of remaining resources in $S_A$ is less than X% of the total resources in the resource selection window (where a value of X% is configured in the resource pool and is related to $prio_{TX}$), increase the RSRP threshold determined in step 3 (for example, increase by 3 dBm each time), and continue to perform step 4 until the quantity of remaining resources in $S_A$ is not less than X% of the total resources in the resource selection window.

The terminal device reports, to the higher layer, $S_A$ obtained after resource exclusion is completed.

A time-frequency resource $(r_0, r_1, r_2, \cdots)$ is randomly selected from $S_A$ to send data. Before the data is sent, resource reevaluation is performed on $(r_0, r_1, r_2, \cdots)$. After the reevaluation, a time-frequency resource $(r_0', r_1', r_2', \cdots)$ is selected from $S_A$ to perform reservation detection.

The terminal device performs resource reevaluation and reservation detection at a moment in at least a slot

$$m - T_3 \quad (T_3 = T_{proc,1}^{SL})$$, and the terminal device may additionally trigger resource reevaluation and/or reservation detection before and after the slot $m$-$T_3$ based on implementation. The manner of determining whether $(r_0, r_1, r_2, \cdots)$ and $(r_0', r_1', r_2', \cdots)$ need to be excluded is the same as that in step 1 to step 7. One of the following conditions is met: (1) An *sl-PreemptionEnable* parameter is provided and configured as enabled, and $prio_{TX} > prio_{RX}$; or (2) an *sl-PreemptionEnable* parameter is provided and is not configured as enabled, and $prio_{RX} < prio_{pre}$ and $prio_{TX} > prio_{pre}$ are met, where $prio_{pre}$ is configured by the higher layer. If $r_i$ and/or $r_i'$ in $(r_0, r_1, r_2, \cdots)$ and $(r_0', r_1', r_2', \cdots)$ do/does not belong to $S_A$ (that is, $r_i$ and $r_i'$ are respectively excluded during reevaluation and/or reservation detection), $r_i$ and/or $r_i'$ are/is reselected. A slot $m$ is a next slot to be sent, that is, the slot $m$ belongs to $(r_0, r_1, r_2, \cdots)$ and $(r_0', r_1', r_2', \cdots)$.

FIG. 4 is used as an example. In a reservation detection process, a UE-A (an example of the terminal device) may sense, by parsing first-stage SCI of a UE-B and first-stage SCI of a UE-C, resources reserved by the UE-B and the UE-C. The SCI of the UE-B indicates the UE-B to reserve two resources, and the two resources are respectively located in a sensing window and a resource selection window, as shown by dashed arrows. The SCI of the UE-C indicates the UE-C to reserve three resources, and the three resources are located in the resource selection window, as shown by dashed arrows. R1 represents a retransmission resource, and P represents continuous transmission resources.

At a moment n, the UE-A triggers resource selection, and the UE-A determines whether a resource in $S_A$ overlaps resources (for example, resources in the resource selection window) reserved by the UE-B and the UE-C. If $S_A$ completely overlaps the resources reserved by the UE-B and the UE-C, the UE-A reselects a resource. For example, the UE-A reselects a resource pool. If $S_A$ partially overlaps the resources reserved by the UE-B and the UE-C, and a remaining resource in $S_A$ meets a requirement of a sidelink service (for example, a beam training service), the UE-A reserves the remaining resource in $S_A$. If $S_A$ partially overlaps the resources reserved by the UE-B and the UE-C, and a remaining resource in $S_A$ do not meet a requirement of a sidelink service, the UE-A reselects a resource pool. For example, the UE-A reselects a resource pool.

2. S-SSB.

The S-SSB includes a sidelink primary synchronization signal (sidelink primary synchronization signal, S-PSS), a sidelink secondary synchronization signal (sidelink secondary synchronization signal, S-SSS), and a PSBCH. In NR, the S-SSB is used for cell search on a sidelink, and the cell search on the sidelink usually includes the following steps.

S1: A transmit end broadcasts the S-SSB, and a receive end blindly detects the S-SSB.

S2: The receive end determines a system frame start position and a physical cell identifier (physical cell identifier, PCI) based on the S-PSS and the S-SSS in the S-SSB.

S3: The receive end determines a DMRS position, and then determines a time-frequency resource position of the PSBCH.

S4: After obtaining PSBCH data, the receive end performs steps such as frequency offset estimation, phase compensation, channel estimation and equalization, and decoding, and parses out a master information block (master information block, MIB).

When a UE (the transmit end) determines that the S-SSB needs to be broadcast, the UE determines, in a period of 160 ms (that is, 16 radio frames), a time domain position for transmitting the S-SSB based on S-SSB configuration information in RRC signaling or pre-configuration (pre-configuration) information, where the pre-configuration information is information recorded in hardware and/or software of the UE, and the S-SSB configuration information includes the following three parameters:

① $N_{period}^{S-SSB}$: indicates a quantity of S-SSBs transmitted in the period of 160 ms, where $N_{period}^{S-SSB}$ has different quantities in different subcarrier spacing (sub-carrier space, SCS) configurations, as shown in Table 4.

Table 4

| Frequency range | SCS | Possible value of $N_{period}^{S-SSB}$ |
|---|---|---|
| FR 1 | 15 kHz | 1 |
| | 30 kHz | 1, 2 |
| | 60 kHz | 1, 2, 4 |
| FR 2 | 60 kHz | 1, 2, 4, 8, 16, 32 |
| | 120 kHz | 1, 2, 4, 8, 16, 32, 64 |

② $N_{offset}^{S-SSB}$ : indicates a slot offset between a 1st S-SSB transmitted in one period and a start point of the period.

③ $N_{interval}^{S-SSB}$ : indicates a slot interval between two adjacent S-SSBs in one period, where a value of $N_{period}^{S-SSB}$ needs to be greater than 1.

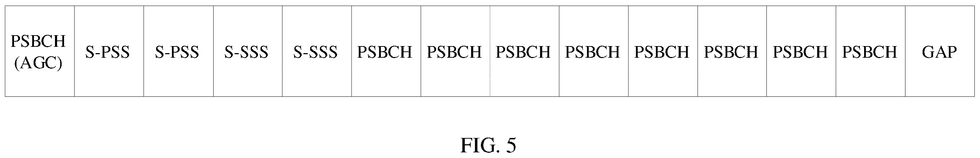

According to the foregoing three parameters, a position of the UE for transmitting the S-SSB is determined statically or semi-statically (semi-static). For example, when $N_{period}^{S-SSB}=2$ , $N_{offset}^{S-SSB}=5$, and $N_{interval}^{S-SSB}=6$, a possible time domain position for transmitting the S-SSB is shown in FIG. 5. In this way, for each 160-ms period, the UE transmits the S-SSB in two slots whose slot indexes are 5 and 12, where a value range of the slot index is a natural number starting from 0.

The S-SSB broadcast by the UE includes a 56-bit PSBCH payload (payload), and the PSBCH payload includes the following fields (fields):

① *sl-TDD-Config* field: a 12-bit bit sequence, indicating uplink and downlink time division duplex (time division duplex, TDD) information;

② *inCoverage* field: a 1-bit Boolean variable, where when a value is "True", it indicates that the UE transmitting the S-SSB is in network coverage, or the UE uses a global navigation satellite system (global navigation satellite system, GNSS) as a synchronization source;

③ *directFrameNumber* field: a 10-bit bit sequence, indicating a direct frame number (direct frame number, DFN) corresponding to a radio frame used for transmitting the S-SSB;

④ *slotIndex* field: a 7-bit bit sequence, indicating a slot index corresponding to a slot used for transmitting the S-SSB; and

⑤ *reservedBits* field: a 2-bit bit sequence, used as a reserved bit for subsequent function extension.

The foregoing 32 bits form a 56-bit PSBCH payload transmitted in the S-SSB after a 24-bit cyclic redundancy check (cyclic redundancy check, CRC) bit is added. After successfully decoding the PSBCH payload, the receive end may align a radio frame and a slot with the transmit end of the S-SSB based on the 10-bit *directFrameNumber* field and the 7-bit *slotIndex* field, to complete a basic synchronization process.

Based on the foregoing specific S-SSB transmission method, when a plurality of UEs need to broadcast S-SSBs, the plurality of UEs may transmit the S-SSBs in a same slot by using same RRC signaling or S-SSB configuration information in pre-configuration information, and PSBCH payloads of the S-SSBs transmitted by the plurality of UEs are the same. In this way, the receive end may determine transmission positions of the S-SSBs by using the same RRC signaling or the same S-SSB configuration information in the pre-configuration information, then simultaneously receive the S-SSBs from the plurality of UEs at the transmission positions of the S-SSBs, and combine and decode the S-SSBs of the plurality of UEs, thereby improving S-SSB receiving performance.

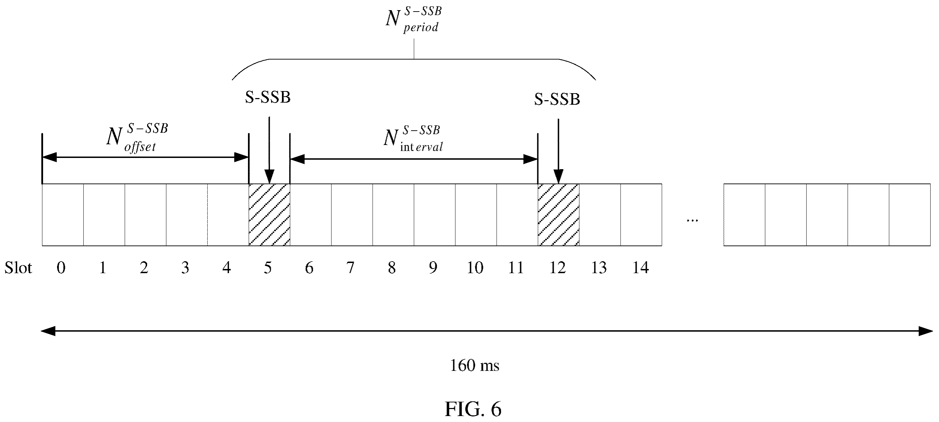

An example of a time domain structure of the S-SSB is shown in FIG. 6. A slot length of the S-SSB is 14 orthogonal frequency division multiplexing (orthogonal frequency division multiplexing, OFDM) symbols, where if a 0th symbol is used for AGC, the 0th symbol is a copy of a 5th PSBCH symbol, a 1st symbol and a 2nd symbol are used to transmit the S-PSS, a 3rd symbol and a 4th symbol are used to transmit the S-SSS, and a last symbol is set to null, namely, a guard period (guard period, GAP) symbol, and is used for receiving/transmitting switching, remaining symbols are used to transmit PSBCH information.

3. Beam.

The beam is a communication resource, and may be divided into a transmit beam (or a transmission beam) and a receive beam. A technology for forming the beam may be a beamforming technology or another technology means. Beamforming includes transmit beamforming and receive beamforming.

The transmit beam is a beam that has a spatial directivity and that is formed by a signal sent by a transmit end by using a specific beamforming weight. The receive beam is a beam that has a spatial directivity and that is formed by a signal received by a receive end by using a specific beamforming weight.

Transmit beamforming: When a transmit end with an antenna array sends a signal, a specific amplitude and phase are set on each antenna element in the antenna array, so that the sent signal has a specific spatial directivity, to be specific, signal power in some directions is high, signal power in some directions is low, and a direction with highest signal power is a direction of the transmit beam. The antenna array includes a plurality of antenna elements. The additional specific amplitude and phase are a beamforming weight. Receive beamforming: When a receive end with an antenna array receives a signal, a specific amplitude and phase are set on each antenna element in the antenna array, so that a power gain of the received signal has a directivity, to be specific, power gains of signals received in some directions are high, power gains of signals received in some directions are low, and a direction with a highest power gain in signal reception is a direction of the receive beam. The antenna array includes a plurality of antenna elements. The additional specific amplitude and phase are a beamforming weight.

Sending a signal by using a beam may be understood as sending the signal by using a beamforming weight. Receiving a signal by using a beam may be understood as receiving the signal by using a beamforming weight.

Different beams may be understood as different resources, or may be understood as different spatial directions. This is not limited. Same information or different information may be sent by using (via) different beams.

It should be noted that in an SL communication system, the transmit end and the receive end may generate one or more beams. Before data transmission, the transmit end and the receive end need to perform beam alignment.

4. Beam management.

Beam management means a process in which a base station and a UE obtain and maintain a beam set used for sending or receiving, and is a reference working procedure for beamforming in a MIMO system. Beam management includes the following four technical points:

① beam determination (beam determination): a process in which the base station or the UE selects a transmit beam or a receive beam of the base station or the UE;

② beam measurement (beam measurement): a process in which the base station or the UE measures a received beamformed signal;

③ beam reporting (beam reporting): a process in which the UE reports a beam measurement result to the base station; and

④ beam sweeping (beam sweeping): a process in which the base station or the UE sequentially selects, in a specified sweeping manner in a time period, a beam for sending or receiving, to cover a space area.

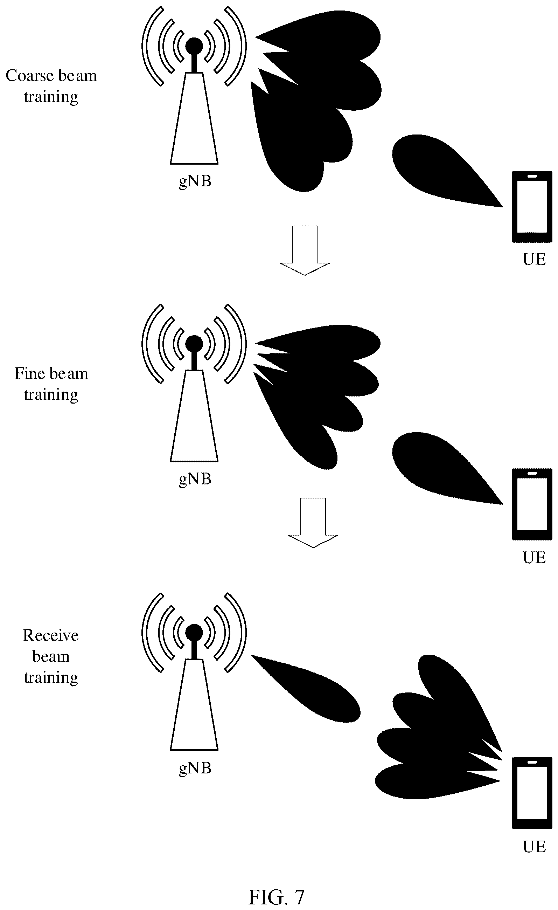

Beam management can be classified into three states based on a working state, as shown in FIG. 7.

Coarse beam training: The UE measures a transmit beam set of the base station, and selects a transmit beam of the base station.

Fine beam training: Based on the coarse beam training, the UE measures a smaller or narrower transmit beam set, to improve the transmit beam of the base station.

Receive beam training: The UE measures a repeated transmit beam by using different receive beams, to improve a receive beam of the UE.

Based on the four technical points and the three states, downlink beam management is performed, and a basic procedure is as follows:

The base station configures a maximum of 64 beam directions, where each beam direction corresponds to one synchronization signal block (synchronization signal block, SSB) and a time-frequency resource used by the UE for beam reporting. The base station sequentially sends SSBs in directions in a sweeping manner, and the UE performs beam measurement to obtain RSRPs of the SSBs. The UE needs to associate the measured RSRP with a 6-bit sequence number of the SSB. Therefore, the UE obtains least significant three bits from a physical broadcast channel (physical broadcast channel, PBCH) DMRS, obtains most significant three bits from bits of a PBCH payload (payload), and combines the bits to obtain a sequence number of the received SSB. The PBCH DMRS is generated based on a pseudo-random sequence, and a manner of carrying the least significant three bits of the SSB sequence number is implemented by determining an initial value $c_{init}$ of the pseudo-random sequence by using the three bits. The UE obtains the SSB sequence number by performing blind detection on the PBCH DMRS. Then, the UE selects an SSB set through RSRP comparison, and reports an SSB sequence number in the set and a corresponding RSRP to the base station on a given time-frequency resource. The base station performs beam determination by using reported information. In this way, an initial beam selection process is completed. A similar procedure is used for uplink beam management, but different reference signals are used.

Due to a centralized scheduling mechanism of the NR system, in a physical downlink shared channel (physical downlink shared channel, PDSCH), parameters such as a time domain position, a frequency domain position, a bandwidth, and a period of the SSB may be used to implement standalone (standalone) sending and resource selection through centralized configuration of the base station and RRC resource scheduling. The UE may complete the beam training process by using the SSB parameters configured by the base station. In a sidelink, because of a distributed characteristic of the sidelink, different UEs are in equal statuses, and there is no centralized beam management and scheduling process in NR Uu, a high-reliability beam training process between the UEs becomes more challenging.

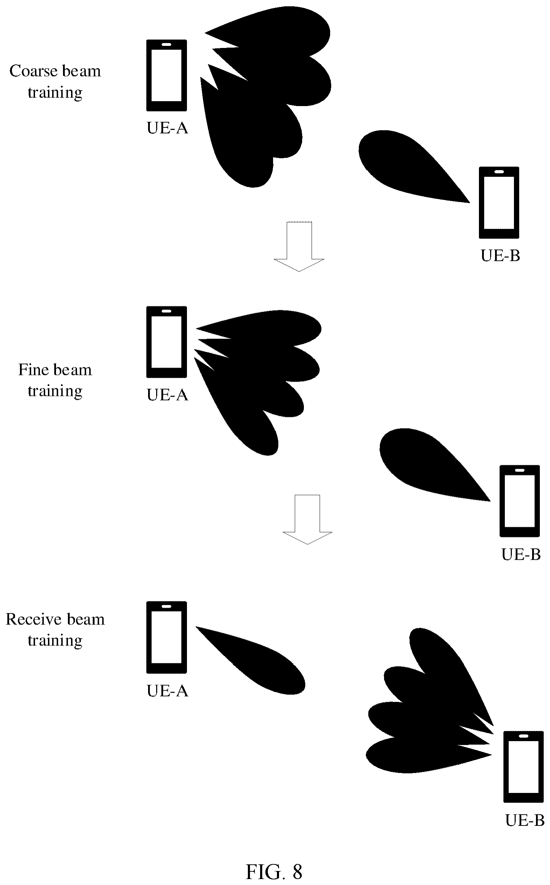

As shown in FIG. 8, it is expected that a UE-A and a UE-B select an optimal transmit/receive beam pair by using three beam training phases. However, in the sidelink, the UE-A and the UE-B are in equal statuses, and the UE-A cannot configure a time-frequency resource for the UE-B. When the UE-A sends a beam, the UE-B may be communicating with another device, and the UE-B cannot receive all beams of a transmit end. Consequently, reliability and effectiveness of beam training are reduced.

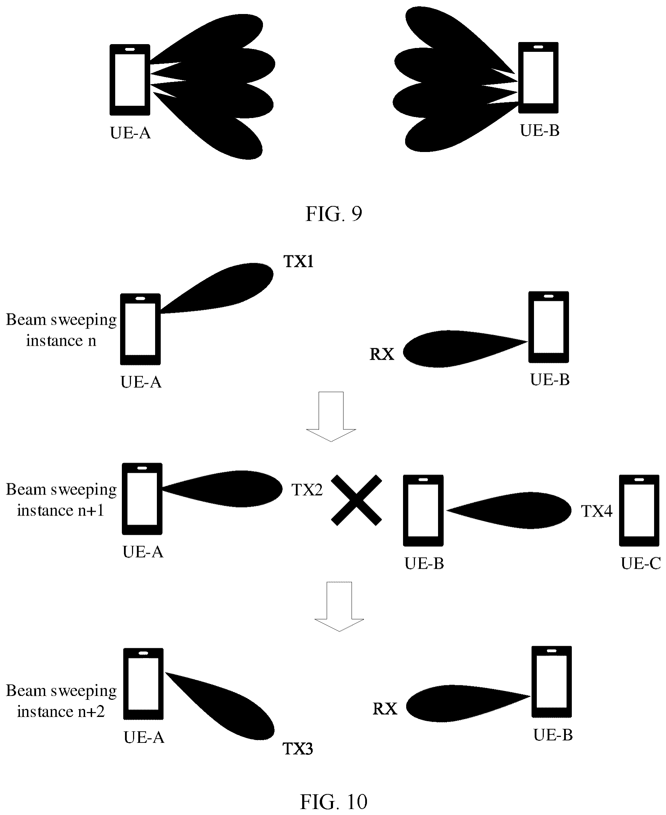

In addition, beam training is not considered in an existing design of a sidelink signal, and there is no function used for beam training. If the existing sidelink signal is used to perform beam training, there is a serious half-duplex problem. As shown in FIG. 9, each UE may send a sidelink signal on a sidelink time domain resource. When a UE-A and a UE-B send sidelink signals on a same time domain resource, due to a half-duplex problem, the UE-A cannot receive the sidelink signal sent by the UE-B, and the UE-B cannot receive the sidelink signal sent by the UE-A. Consequently, beam training cannot be completed.

Because the sidelink is with the foregoing resource scheduling problem and the foregoing half-duplex problem, if the sidelink signal is directly used to perform beam training, a case shown in FIG. 10 occurs.

The UE-A performs beam sweeping according to a sending order of {TX1, TX2, TX3}. In a beam sweeping instance (beam sweeping instance) n, the UE-A transmits a beam TX1, and the UE-B receives the beam TX1 by using a receive beam RX. In this phase, the UE-B may receive a signal carried by TX1, but TX1 is not aligned with the UE-B. As a result, TX1 is not an optimal receive beam of the UE-B. In a beam sweeping instance n+1, the UE-A transmits a beam TX2, and the UE-B in this case is communicating with a UE-C by using a transmit beam TX4. In this phase, the UE-B cannot receive TX2. In a beam sweeping instance n+2, the UE-A transmits a beam TX3, and the UE-B receives the beam TX3 by using a receive beam RX. In this phase, the UE-B may receive a signal carried by TX3, but TX3 is not aligned with the UE-B. As a result, TX3 is not an optimal receive beam of the UE-B. If TX2 is the optimal receive beam of the UE-B, the UE-B misses receiving the optimal beam. Consequently, reliability and effectiveness of beam training are reduced.

According to the sidelink beam training method provided in embodiments of this application, a problem that reliability and effectiveness of sidelink beam training are reduced can be resolved.

First, an application scenario of the sidelink beam training method provided in embodiments of this application is described. The method may be applied to a scenario such as V2X or device-to-device (device-to-device, D2D). D2D may include a direct connection scenario in wireless fidelity (wireless fidelity, Wi-Fi).

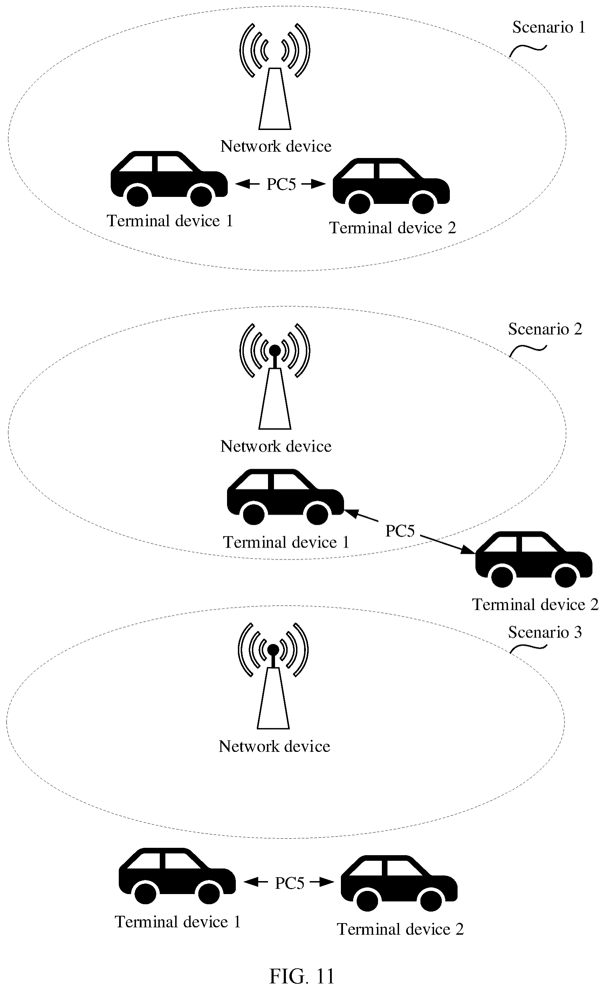

FIG. 11 shows three V2X scenarios applicable to this application. In a scenario 1, both a terminal device 1 and a terminal device 2 are located in signal coverage (as shown by a dashed line) of a network device. In a scenario 2, a terminal device 1 is located in signal coverage of a network device, and a terminal device 2 is located outside the signal coverage of the network device. In a scenario 3, both a terminal device 1 and a terminal device 2 are located outside signal coverage of a network device. In the three scenarios, both the terminal device 1 and the terminal device 2 communicate with each other through a PC5 interface, and both use the mode 2 in the resource assignment mode.

The network device in FIG. 11 may be one of the following devices: a macro base station in a universal mobile telecommunications system (universal mobile telecommunications system, UMTS) or LTE, a micro base station in a heterogeneous network (heterogeneous network, HetNet), a baseband processing unit (baseband unit, BBU) and a remote radio unit (remote radio unit, RRU) in a distributed base station scenario, a BBU pool (BBU pool) and an RRU in a cloud radio access network (cloud radio access network, CRAN) scenario, and a gNB. Alternatively, the network device may be a relay station that functions as a base station, an access point, a vehicle-mounted device, a wearable device, or a network device in a future public land mobile network (public land mobile network, PLMN).

In embodiments of this application, the terminal device may be a device that provides a voice/data for a user, for example, a handheld device or vehicle-mounted device having a wireless connection function. The terminal device may be referred to as a user equipment, and is sometimes referred to as a terminal, an access station, a UE station, a remote station, a wireless communication device, a user apparatus, or the like.

For example, the terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle, a wireless communication module in a vehicle, a telematics box (Telematics BOX, T-box), a road side unit (road site unit, RSU), a wireless terminal in unmanned driving, a smart speaker in an internet of things (internet of things, IoT) network, a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like. This is not limited in embodiments of this application.

By way of an example but not a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size electronic devices that can implement complete or partial functions without depending on smartphones, for example, smart watches or smart glasses, and include electronic devices that are dedicated to only one type of application function and that need to be used together with other devices such as smartphones, for example, various smart bands or smart jewelry used for measuring physical signs.

Alternatively, the terminal device may be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or an RSU. Alternatively, the terminal device may be a device in D2D communication, for example, an electricity meter or a water meter.

In addition, in embodiments of this application, the terminal device may alternatively be a terminal device in an IoT system. IoT is an important component in development of future information technologies. A main technical feature of the IoT is to connect an object to a network by using a communication technology, to implement an intelligent network of human-machine interconnection and thing-thing interconnection.

If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBU).

The terminal device in this application may alternatively be a vehicle-mounted module, a vehicle-mounted assembly, a vehicle-mounted component, a vehicle-mounted chip, or an on-board unit that is built in a vehicle as one or more components or units. The vehicle uses the vehicle-mounted module, the vehicle-mounted assembly, the vehicle-mounted component, the vehicle-mounted chip, or the on-board unit that is built in the vehicle, to implement a method in this application.

Specific types of the terminal device and the network device are not limited in embodiments of this application.

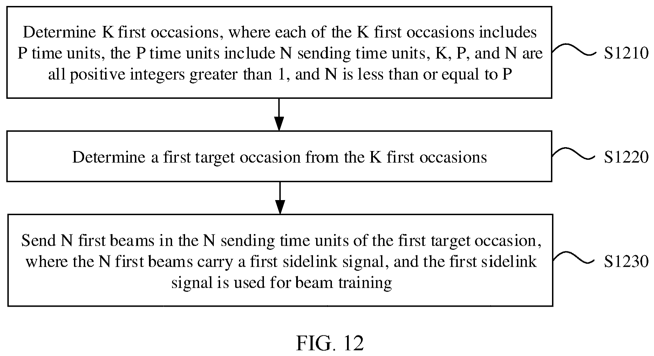

FIG. 12 shows a sidelink beam training method according to an embodiment of this application. The method includes the following content.

S1210: Determine K first occasions, where each of the K first occasions includes P time units, the P time units include N sending time units, K, P, and N are all positive integers greater than 1, and N is less than or equal to P.

The method shown in FIG. 12 may be performed by a first terminal device, or may be performed by a chip, a module, or a circuit in the first terminal device. The following uses the first terminal device as an example for description.

The first terminal device may be the terminal device 1 or the terminal device 2 shown in FIG. 11. The K first occasions may be time domain resources in a resource pool configured by a network device, or may be time domain resources pre-configured by the network device, or time domain resources predefined by the terminal device.

For example, the network device may configure or pre-configure the K first occasions by using RRC signaling. All terminal devices that receive the RRC signaling determine the K first occasions based on indication information in the RRC signaling. The indication information in the RRC signaling indicates indexes of the K first occasions. The first terminal device determines the K first occasions based on the indexes of the K first occasions. The indication information in the RRC signaling may also indicate a list (or set), the first terminal device determines a target list (or set) from the at least one list (or set) based on the indication information, and the target list (or set) includes the K first occasions.

The predefined time domain resource may be a resource indicated by information written by a terminal vendor into the first terminal device, or may be a time domain resource defined by using a communication protocol. Based on a same predefined time domain resource, a transmit end and a receive end of a sidelink have consistent understanding of time domain resource positions of the K first occasions.

A manner in which the first terminal device determines the K first occasions is not limited to the foregoing manners.

It should be noted that in this application, limiting terms such as "first" and "second" are used to distinguish between different objects. For example, "first beam" and "second beam" in the following represent two beams, and parameters of the two beams may be the same or may be different. There is no other limitation except this.

The first occasion may also be referred to as a first communication occasion, a first time domain position, a first time domain resource, or a first time pattern (time pattern). The following uses descriptions of a time pattern as an example for description. A specific name of the first occasion is not limited in this application. The first occasion is essentially a set of P time units. The time unit may be a symbol, a slot, a mini-slot, a subframe, a frame, or a time period of another type. A specific type of the time unit is not limited in this application.

Duration of the P time units may be the same or may be different. All the P time units may be used for sending; or a part of the P time units may be used for sending, and a remaining part is used for receiving or another purpose.

The P time units may be continuous time units, or may be discrete time units. When the P time units are discrete time units, a part of the P time units may also be continuous time units.

The N sending time units in the P time units are used to send a sidelink signal. The sidelink signal may be an S-SSB, or may be another signal transmitted on a sidelink, for example, may be a sidelink channel state information reference signal (sidelink channel state information reference signal, SL CSI-RS), or may be sidelink data. Specific content of the sidelink signal is not limited in this application. The following describes the K first occasions by using an example in which the sidelink signal is an S-SSB.

Example 1: The first occasion including N discrete sending time units.

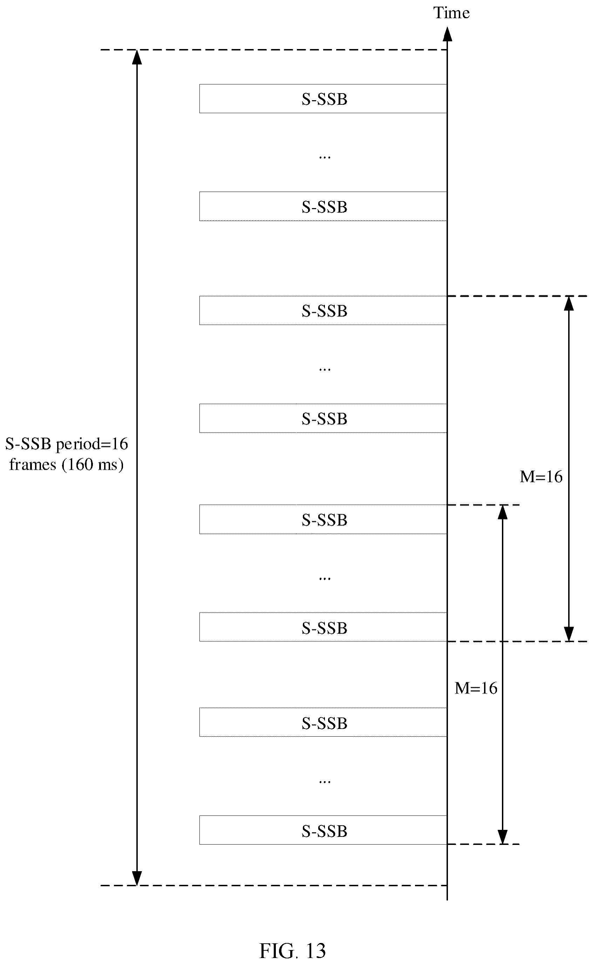

A case in which an S-SSB period is 160 ms, an SCS is 60 kHz, and a maximum quantity of possible S-SSB sending positions (resource positions of the sending time units) is 32 is used as an example. The N discrete sending time units in the first occasion are shown in FIG. 13, M is a quantity (an optional parameter) of candidate time units, the N sending time units belong to the M candidate time units, and $P \geq M \geq N$.

'1' may be used to represent a resource position of a sending time unit, and '0' may be used to represent a resource position of a time unit other than the sending time unit. When M=16 and N=8, there are (32-M) $C_M^N = 16\, C_{16}^8$ time patterns in an S-SSB period shown in FIG. 13, that is, $K = 16\, C_{16}^8$. The following provides five examples of S-SSB time patterns. It should be noted that, when "$P \geq M \geq N$" is met, values of P, M, and N are not limited in this embodiment of this application.

Time pattern 1: <u>1 1 0 1 0 0 1 0 1 0 1 0 0 1 1</u> 0 0 0 0 0 0 0 0 0 0 0 0 0 0 0 0 0;

time pattern 2: 0 0 <u>1 0 1 1 0 1 0 1 0 0 1 0 0 1 1</u> 0 0 0 0 0 0 0 0 0 0 0 0 0 0 0;
time pattern 3: 0 0 0 0 0 0 0 0 0 0 0 <u>1 0 0 0 0 1 0 1 1 0 1 1 1 0</u> 1 0 0 0 0 0;
time pattern 4: 0 0 0 0 0 0 0 0 0 0 0 0 0 0 0 0 <u>0 1 0 0 1 0 0 0 1 0 1 1 1 1 1</u>; and
time pattern 5: <u>0 1 1 0 1 1 0 1 0 1 0 0 1 0 1 0</u> 0 0 0 0 0 0 0 0 0 0 0 0 0 0 0 0.

In the time pattern 1 to the time pattern 5, an underscore indicates a resource position of a candidate time unit. The time pattern 1 is used as an example. Candidate time units are first 16 S-SSB sending positions (first 16 time units), and <u>1 1 0 1 0 0 1 0 1 0 1 0 0 1 1</u> indicates that in the 32 S-SSB sending positions, 1st, 2nd, 4th, 7th, 9th, 11th, 14th, and 15th S-SSB sending positions are used to send the S-SSB. In the time pattern 2, candidate time units are 2nd to 18th S-SSB sending positions, and <u>1 0 1 1 0 1 0 1 0 0 1 0 0 1 1 0</u> indicates that in the 32 S-SSB sending positions, 3rd, 5th, 6th, 8th, 10th, 13th, 16th, and 17th S-SSB sending positions are used to send the S-SSB.

For the time pattern 1 and the time pattern 2, any S-SSB sending position in the time pattern 1 is different from any S-SSB sending position in the time pattern 2. This case is referred to as a case in which resources do not conflict, or sending positions of the S-SSB do not overlap.

For the time pattern 1 and the time pattern 5, the 2nd S-SSB sending position in the time pattern 1 and the 2nd S-SSB sending position in the time pattern 5 overlap, and the 15th S-SSB sending position in the time pattern 1 and the 15th S-SSB sending position in the time pattern 5 overlap. This case in which there are one or more S-SSB sending positions that overlap is referred to as a case in which resources conflict.

It can be learned from the foregoing five time patterns that the discrete sending time units may enable resource positions of the N sending time units to have larger selection space, and the network device may configure more time patterns based on resource positions of the M candidate time units, to be capable of adapting to more beam training scenarios.

In addition, the discrete sending time units further have the following advantage: Even if there is a resource conflict in time patterns selected by two transmit ends, a quantity of S-SSB sending positions that overlap is limited, and the transmit end and the receive end still have a large opportunity to obtain an optimal beam pair.

For example, as shown in FIG. 10, if the UE-A selects the time pattern 1, and the UE-C selects the time pattern 5, the patterns selected by the two UEs have only two overlapping positions. The UE-A may perform beam training with the UE-B by using remaining six S-SSB sending positions in the time pattern 1, and the UE-C may perform beam training with the UE-B by using remaining six S-SSB sending positions in the time pattern 5. The UE-A, the UE-B, and the UE-C still have a large opportunity to obtain an optimal beam pair.

When the first occasion includes the N discrete sending time units, the N sending time units may include continuous sending time units. Optionally, a quantity of continuous sending time units is less than or equal to a second threshold, and the second threshold is a positive integer greater than 1 and less than N.

The quantity of continuous sending time units is less than or equal to the second threshold (for example, 3), so that loss of continuous beams in some time periods in which communication link quality is poor can be avoided, and reliability and effectiveness of beam training can be improved. For example, the first terminal device selects the time pattern 1. When there is severe interference (for example, channel deep fading) between the 3rd to 6th S-SSB sending positions, the first terminal device sends the S-SSB only once at the 4th S-SSB sending position, in other words, seven S-SSBs in eight S-SSBs sent by the first terminal device are successfully received by the receive end. In this case, the first terminal device still has a large opportunity to obtain an optimal beam pair, so that reliability and effectiveness of beam training in a case of channel interference are improved.

Example 2: The first occasion including N continuous sending time units.

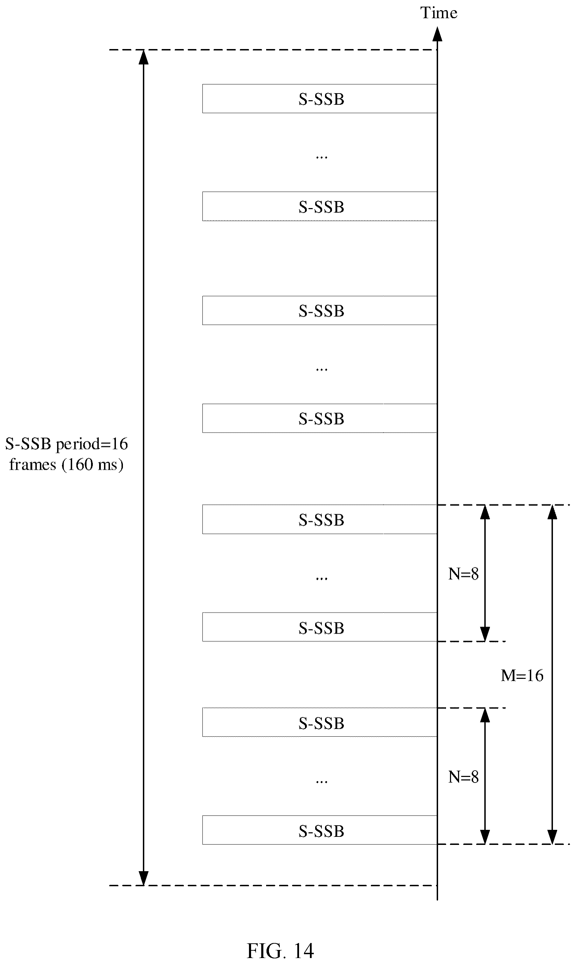

In a case in which an S-SSB period is 160 ms, an SCS is 60 kHz, and a maximum quantity of S-SSB sending positions is 32, the N continuous sending time units in the first occasion are shown in FIG. 14, M is a quantity (an optional parameter) of candidate time units, the N sending time units belong to the M candidate time units, and $P \geq M \geq N$.

When M=16 and N=8, there are (32-N)=24 time patterns in an S-SSB period shown in FIG. 14, that is, K=24. The following provides five examples of S-SSB time patterns.

Time pattern 6: <u>1 1 1 1 1 1 1 1</u> 0 0 0 0 0 0 0 0 0 0 0 0 0 0 0 0 0 0 0 0 0 0 0 0;

time pattern 7: 0 0 0 0 <u>0 0 0 0 1 1 1 1 1 1 1 1</u> 0 0 0 0 0 0 0 0 0 0 0 0 0 0 0 0;
time pattern 8: 0 0 0 0 0 0 0 0 0 0 0 0 <u>0 0 0 0 1 1 1 1 1 1 1 1</u> 0 0 0 0 0 0 0 0;
time pattern 9: 0 0 0 0 0 0 0 0 0 0 0 0 0 0 0 0 0 0 0 0 <u>0 0 0 0 1 1 1 1 1 1 1 1</u>; and
time pattern 10: <u>0 1 1 1 1 1 1 1 1</u> 0 0 0 0 0 0 0 0 0 0 0 0 0 0 0 0 0 0 0 0 0 0 0.

In the time pattern 6 to the time pattern 10, an underscore indicates a resource position of a candidate time unit. The time pattern 6 is used as an example. Candidate time units are first 16 S-SSB sending positions (first 16 time units), and <u>1 1 1 1 1 1 1 1</u> in the time pattern 6 indicates that in the 32 S-SSB sending positions, 1st to 8th S-SSB sending positions are used to send the S-SSB. In the time pattern 7, candidate time units are first 16 S-SSB sending positions, and <u>1 1 1 1 1 1 1 1</u> in the time pattern 7 indicates that in the 32 S-SSB sending positions, 9th to 16th S-SSB sending positions are used to send the S-SSB.

In the time pattern 6 to the time pattern 10, there is no resource conflict between the time pattern 6, the time pattern 7, the time pattern 8, and the time pattern 9; and there are resource conflicts between the time pattern 10 and the time pattern 6, between the time pattern 10 and the time pattern 7, between the time pattern 10 and the time pattern 8, and between the time pattern 10 and the time pattern 9.

It can be learned from the foregoing five time patterns that the continuous sending time units can enable the first terminal device to quickly complete S-SSB sending, thereby reducing a beam training latency; and are especially applicable to a latency-sensitive sidelink service.

In the foregoing two examples, if an objective is to implement a low latency in a beam training process, the network device may configure a time pattern on a basis of M that is close to N, so that N first beams are transmitted as soon as possible. If an objective is to reduce an overlapping quantity of S-SSB sending positions, the network device may configure a time pattern on a basis of M that is greatly different from N, so that an overlapping quantity of '1' in different S-SSB time patterns is as small as possible.

After determining the K first occasions, the first terminal device may perform the following steps.

S1220: Determine a first target occasion from the K first occasions.

The first terminal device may randomly select one first occasion from the K first occasions as the first target occasion. The first terminal device may determine the first target occasion in the resource selection manner shown in FIG. 4. The K first occasions are equivalent to the resource set $S_A$. The first terminal device may alternatively determine the first target occasion in another manner. A specific manner of determining the first target occasion by the first terminal device is not limited in this application.

Because a sidelink transmission resource needs to be reserved for use, a part of first occasions in the K first occasions may be occupied, and randomly selecting one first occasion as the first target occasion may cause a resource conflict. In this case, the first terminal device uses the following optional implementation, to reduce a probability that reliability and effectiveness of beam training are reduced due to the resource conflict.

Optionally, the first terminal device may alternatively determine at least one unoccupied first occasion from the K first occasions, and then determine the first target occasion from the at least one unoccupied first occasion.

The unoccupied first occasion is a first occasion remaining after the occupied first occasion is excluded from the K first occasions. The first terminal device determines, in a manner such as sensing, a time pattern used by another terminal device. Actually, due to different sizes of sensing windows, the occupied first occasion has the following two cases:

Case 1: The occupied first occasion determined through sensing is actually used by the another terminal device.
Case 2: The occupied first occasion determined through sensing is actually not used by the another terminal device, but the first terminal device does not sense that the first occasion is not used by the another terminal device.

For example, the sensing manner of the first terminal device is detecting S-SSB sending in one complete S-SSB period by receiving and decoding first-stage SCI. If a time pattern sensed by the first terminal device in a sensing window is 0 0 1 0 1 1 0 1 0 1 0 0 1 0 0 1 1 0 0 0 0 0 0 0 0 0 0 0 0 0 0 0, and the first occasion is the time pattern 1 to the time pattern 5, the first terminal device may determine that the time pattern 2 is occupied, and the first terminal device may exclude the pattern 2 from the time pattern 1 to the time pattern 5, and determine the time pattern 1, the time pattern 3, the time pattern 4, and the time pattern 5 as the unoccupied first occasion. This case belongs to Case 1.

For another example, the sensing manner of the first terminal device is sensing S-SSB sending of first two S-SSB sending positions in one S-SSB period. If a time pattern sensed by the first terminal device in a sensing window is 0 0, and the first occasion is the time pattern 1 to the time pattern 5, the first terminal device may determine that the time pattern 2 to the time pattern 4 are all occupied, and the first terminal device may exclude the time pattern 2 to the time pattern 4 from the time pattern 1 to the time pattern 5, and determine the time pattern 1 and the time pattern 5 are the unoccupied first occasion. Actually, the time pattern 2 to the time pattern 4 may not be used by the another terminal device, but the first terminal device does not sense the time pattern 2 to the time pattern 4. This case belongs to Case 2.

It can be learned that the unoccupied first occasion can be accurately determined by sensing S-SSB sending in one complete S-SSB period, but this requires long time, and is applicable to a latency-insensitive sidelink service. The unoccupied first occasion can be accurately determined by sensing S-SSB sending in a part of S-SSB periods, but this manner may exclude some time patterns that are actually not used, causing a waste of resources; and is applicable to a latency-sensitive sidelink service.

Optionally, when the K first occasions include Q occupied first occasions, the first terminal device may determine, according to the following rule, the first target occasion from the unoccupied first occasion:

An overlapping quantity of N sending time units of the first target occasion and an overlapping quantity of N sending time units of any one of the Q occupied first occasions are less than or equal to a first threshold, the first threshold is a positive integer greater than 1 and less than N, Q is a positive integer, and Q is less than K.

For example, in Example 1, the first terminal device determines that the occupied first occasion is the time pattern 2; and in the remaining four first occasions, there is no resource conflict between the time pattern 1 and the time pattern 2, there is no resource conflict between the time pattern 3 and the time pattern 2, there is no resource conflict between the time pattern 4 and the time pattern 2, and there are six overlapping sending time units between the time pattern 5 and the time pattern 2. If the first threshold is N/2 (that is, 4), the first terminal device may exclude the time pattern 5, and select one of the time pattern 1, the time pattern 3, and the time pattern 4 as the first target occasion.

It can be learned that when there is at least one unoccupied first occasion, a probability that a resource conflict occurs between the first occasion whose overlapping quantity is less than or equal to the first threshold and the occupied first occasion is low, so that using the first occasion as the first target occasion can reduce a probability that reliability and effectiveness of beam training are reduced due to the resource conflict.

In addition, when the first threshold is N/2, in S-SSB time patterns selected by different transmit ends, an overlapping quantity of sending time units≤half of a quantity of beams. This ensures that sending positions of at least one half of initial beams do not overlap, and a probability of mismatch between a single transmit beam and a single receive beam is greatly reduced, thereby ensuring effectiveness and reliability of beam training.

Optionally, when performing S 1220, the first terminal device may further perform the following optional implementation:

The first terminal device determines an average value of an overlapping quantity of the at least one unoccupied first occasion, where the average value of the overlapping quantity is an average value of an overlapping quantity of sending time units of any unoccupied first occasion in the at least one unoccupied first occasion and overlapping quantities of sending time units on all occupied first occasions; and

the first terminal device determines a first occasion corresponding to a minimum value of the average value of the overlapping quantity as the first target occasion.

The average value of the overlapping quantity of the sending units may be represented by a Hamming distance, and a formula for the average value of the overlapping quantity may be represented by $\bar{d} = \dfrac{1}{L} \sum_{i,j=1, i \neq j}^{L} d_{i,j}$, where $\bar{d}$ is an average Hamming distance, $L$ is a quantity of occupied first occasions, $i$ is an index of any unoccupied first occasion, $j$ is an index of any occupied first occasion, and $d_{i,j}$ is a Hamming distance between the any unoccupied first occasion and the any occupied first occasion.

The following uses a time pattern set shown in Table 5 as an example for description.

Table 5

| N=8 and M=16 are used as an example | | |
|---|---|---|
| Time pattern index | S-SSB time pattern | Hamming distance |
| 1 | 0 1 1 0 1 1 0 1 0 1 0 0 1 0 1 0 0 0 0 0 0 0 0 0 0 0 0 0 0 0 0 0 | $d_{i,j}$ =16, where i,j=1, 2, 3, 4, and i≠j |
| 2 | 1 0 0 1 0 0 1 0 1 0 1 1 0 1 0 1 0 0 0 0 0 0 0 0 0 0 0 0 0 0 0 0 | |
| 3 | 0 0 0 0 0 0 0 0 0 0 0 0 0 0 0 0 1 1 0 1 1 0 1 0 1 0 0 1 0 1 0 | |
| 4 | 0 0 0 0 0 0 0 0 0 0 0 0 0 0 0 1 0 0 1 0 0 1 0 1 0 1 1 0 1 0 1 | |
| 5 | 0 0 0 0 0 0 0 0 1 1 0 0 1 0 1 0 1 0 1 0 0 1 0 1 0 0 0 0 0 0 0 0 | ... |
| 6 | 0 0 0 0 0 0 1 1 1 1 1 0 0 0 0 1 1 0 0 0 0 0 0 0 0 0 0 0 0 | ... |
| 7 | 0 0 0 1 0 1 1 0 0 1 0 0 1 0 1 0 1 0 1 0 0 0 0 0 0 0 0 0 0 0 0 | ... |
| 8 | 0 0 0 0 1 0 0 1 1 0 1 0 0 1 0 1 0 1 0 1 0 0 0 0 0 0 0 0 0 0 0 | ... |
| 9 | 0 0 0 0 0 1 1 0 0 1 0 1 0 0 1 0 1 1 0 0 1 0 0 0 0 0 0 0 0 0 0 | ... |
| 10 | 0 0 0 0 0 0 1 0 1 0 1 0 1 0 0 1 0 0 1 0 1 1 0 0 0 0 0 0 0 0 0 | ... |
| 11 | 0 0 0 0 0 0 0 1 0 1 0 1 0 1 0 0 1 0 0 1 0 1 1 0 0 0 0 0 0 0 0 | ... |
| 12 | 0 0 0 0 0 0 0 0 1 0 1 0 1 0 1 0 0 1 0 0 1 0 0 1 0 1 1 0 0 0 0 0 0 0 0 | ... |
| 13 | 0 0 0 0 0 0 0 0 0 1 0 1 0 1 0 1 0 0 1 0 0 1 0 0 1 0 1 1 0 0 0 0 0 0 0 | ... |
| 14 | 0 0 0 0 0 0 0 0 0 0 1 0 1 0 1 0 1 0 0 1 0 0 1 0 0 1 0 1 1 0 0 0 0 0 0 | ... |
| 15 | 0 0 0 0 0 0 0 0 0 0 0 1 0 1 0 1 0 1 0 0 1 0 0 1 0 0 1 0 1 1 0 0 0 0 0 | ... |
| 16 | 0 0 0 0 0 0 0 0 0 0 0 0 1 0 1 0 1 0 1 0 0 1 0 0 1 0 0 1 0 1 1 0 0 0 0 | ... |
| 17 | 0 0 0 0 0 0 0 0 0 0 0 0 0 1 0 1 0 1 0 1 0 0 1 0 0 1 0 0 1 0 1 1 0 0 0 | ... |
| 18 | 0 0 0 0 0 0 0 0 0 0 0 0 0 0 1 0 1 0 1 0 1 0 0 1 0 0 1 0 0 1 0 1 1 0 0 | ... |
| 19 | 0 0 0 0 0 0 0 0 0 0 0 0 0 0 0 1 0 1 0 1 0 1 0 0 1 0 0 1 0 0 1 0 1 1 0 | ... |
| 20 | 0 0 0 0 0 0 0 0 0 0 0 0 0 0 0 0 1 0 1 0 1 0 1 0 0 1 0 0 1 0 0 1 0 1 1 | ... |
| ... | ... | ... |

The S-SSB time pattern shown in Table 5 is an example rather than a limitation. The S-SSB time pattern table applicable to this application may further include more or fewer S-SSB time patterns. A quantity of S-SSB time patterns in Table 5 is not limited in this embodiment of this application.

The time patterns in Table 5 may be used independently or in combination. When the time patterns in Table 5 are used independently, or when a part of time patterns in Table 5 are used in combination, the network device may configure indexes of used time patterns by using RRC signaling. When all time patterns in Table 5 are used in combination, the network device may configure indexes of used time patterns by using RRC signaling, or may configure indexes in Table 5 by using RRC signaling. A manner of using the time pattern list is not limited in this embodiment of this application.

If the current first terminal device determines that the time patterns whose indexes are 1, 2, and 3 are occupied, the first terminal device may select one of the time patterns whose indexes are 4, 5, and 6 as the first target occasion. For the time pattern 4, a Hamming distance between the time pattern 4 and the first three time patterns is 16. Therefore, an average Hamming distance of the time pattern 4 is (16+16+16)/3=16. The time pattern 5 overlaps a part of sending time units in the first three time patterns, so that an average Hamming distance of the time pattern 5 may be calculated as 13.67. The time pattern 6 overlaps a part of sending time units in the first three time patterns, so that an average Hamming distance of the time pattern 6 may be calculated as 13.33.

A larger average Hamming distance indicates a smaller average value of the overlapping quantity of the sending time units in the plurality of time patterns. Based on the foregoing optional implementation, the first terminal device may select the time pattern 4 as the first target occasion.

It can be learned that when there is the at least one unoccupied first occasion, the first terminal device may calculate the average value of the overlapping quantity of the at least one unoccupied first occasion, and a probability that a resource conflict occurs between a first occasion with a smallest average value of an overlapping quantity and the occupied first occasion is lowest, so that using the first occasion with the smallest average value of the overlapping quantity as the first target occasion can reduce a probability that reliability and effectiveness of beam training are reduced due to the resource conflict.

It should be noted that for the time patterns 1 to 10 mentioned in the example in the foregoing embodiment, examples of the time patterns in Table 5, and another time pattern combination applicable to this embodiment of this application, a set size (a specific quantity of time patterns) of the time patterns may be flexibly adapted based on an actual system capacity, and each time pattern in the set may be independently used. For example, when a UE 1 is used as an initial access user terminal in the system, any one of the foregoing time patterns may be used; or several time patterns may be used in combination. For example, a UE 2 chooses to use the time pattern 2 in the table, and a UE 3 may choose to use any time pattern other than the time pattern 2, but preferentially use the time pattern 3 or 4. In this embodiment of this application, some use rules and combination manners are provided, to improve reliability and effectiveness of beam training. However, this is not limited thereto.

After determining the first target occasion, the first terminal device may perform the following step.

S 1230: Send N first beams in the N sending time units of the first target occasion, where the N first beams carry a first sidelink signal, and the first sidelink signal is used for beam training.

For beam training, refer to the foregoing beam management part. Details are not described herein again.

In the method shown in FIG. 12, the K first occasions are time domain resources configured or pre-configured by the network device by using a resource pool, or predefined by the terminal device. The transmit end and the receive end of the sidelink have consistent understanding of time domain positions of the K first occasions. When the first terminal device sends the N first beams in the N sending time units of the first target occasion, the receive end receives the N first beams in the N sending time units, and performs beam training based on the first sidelink signal in the N first beams, so that reliability and effectiveness of sidelink beam training can be improved.

It can be learned from the foregoing that even if a sensing manner of the first terminal device is sensing S-SSB sending in one complete S-SSB period, there is a possibility that a plurality of terminal devices select a same time pattern. In this case, reliability and effectiveness of beam training are greatly reduced. To avoid this case, beam training may be performed by using a plurality of beam training periods.

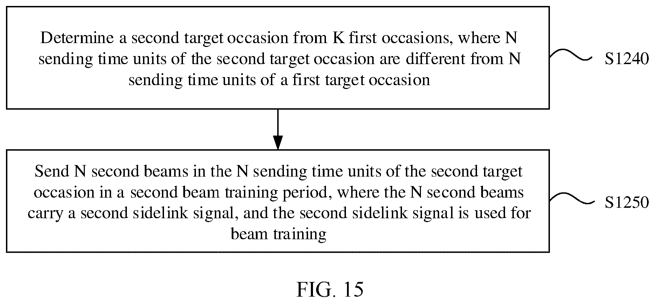

Optionally, as shown in FIG. 15, after the first terminal device sends the N first beams on the first target occasion in a first beam training period, the method shown in FIG. 12 further includes the following steps.

S1240: Determine a second target occasion from the K first occasions, where N sending time units of the second target occasion are different from the N sending time units of the first target occasion.

S1250: Send N second beams in the N sending time units of the second target occasion in a second beam training period, where the N second beams carry a second sidelink signal, and the second sidelink signal is used for beam training.

The first beam training period and the second beam training period may be two S-SSB periods. That the second target occasion is different from the first target occasion may include the following two cases:

Case 3: The N sending time units of the second target occasion completely do not overlap the N sending time units of the first target occasion.

Case 4: The N sending time units of the second target occasion partially do not overlap the N sending time units of the first target occasion.

As shown in Table 5, if the first target occasion is the time pattern 1, the second target occasion may be any one of the time pattern 2 to the time pattern 6. When the second target occasion is any one of the time pattern 2 to the time pattern 4, this case belongs to Case 3. When the second target occasion is the time pattern 5 or the time pattern 6, this case belongs to Case 4.

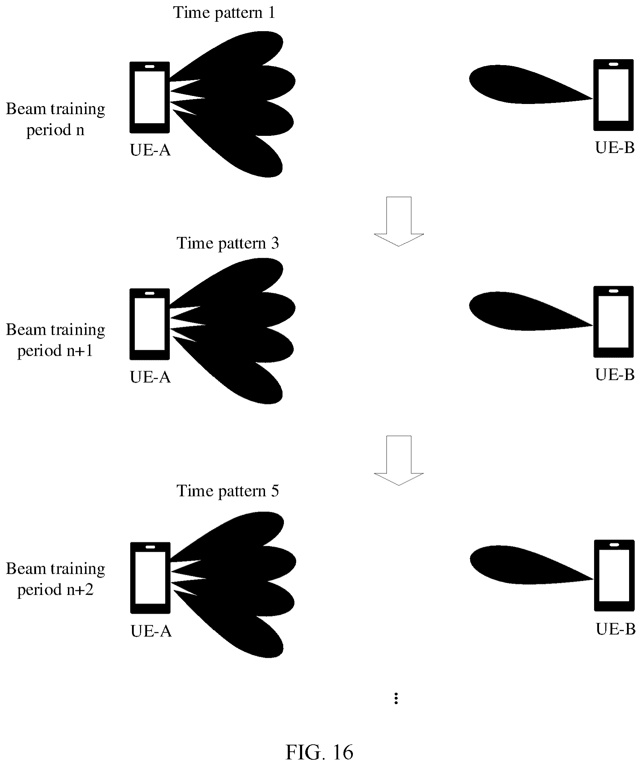

FIG. 16 shows an example of performing beam training by using a plurality of beam training periods.

In a beam training period n, a UE-A (an example of the first terminal device) selects the time pattern 1 to transmit the S-SSB. In a beam training period n+1, the UE-A may select the time pattern 3 to transmit the S-SSB. In a beam training period n+2, the UE-A may select the time pattern 5 to transmit the S-SSB. A principle for the UE-A to select a time pattern in each beam training period may be random selection, may be selection according to a rule configured or pre-configured by the network device, or may be selection according to a rule predefined by the terminal device. A specific manner for the UE-A to select different time patterns in different beam training periods is not limited in this embodiment of this application.

If optimal beams determined in the plurality of beam training periods are the same, the UE-A may determine to obtain the optimal beam. If optimal beams determined in the plurality of beam training periods are different, it indicates that there is a resource conflict in time patterns in a part of training periods. In this case, the UE-A may perform beam training again, or may select an SSB sequence number with a largest quantity of repetitions from a plurality of obtained SSB sequence numbers, and use a beam corresponding to the SSB sequence number as the optimal beam. For example, if the UE-A obtains three SSB sequence numbers in three beam training periods: an SSB 2, an SSB 1, and an SSB 2, and the SSB 2 is with a largest quantity of repetitions, it indicates that a probability that the SSB 2 corresponds to the optimal beam is high, and the UE-A may consider a beam corresponding to the SSB 2 as the optimal beam.

The foregoing describes in detail an example of the method provided in embodiments of this application. It may be understood that to implement the foregoing functions, a corresponding apparatus includes corresponding hardware structures and/or software modules for performing the functions. A person skilled in the art should easily be aware that, in combination with units and algorithm steps of the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

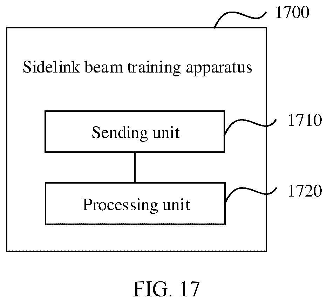

FIG. 17 is a diagram of a structure of a sidelink beam training apparatus according to an embodiment of this application. The apparatus 1700 includes a sending unit 1710 and a processing unit 1720. The sending unit 1710 performs a sending step under control of the processing unit 1720.

The processing unit 1720 is configured to: determine K first occasions, where each of the K first occasions includes P time units, the P time units include N sending time units, the N sending time units are used to send a sidelink signal, K, P, and N are all positive integers greater than 1, and N is less than or equal to P; and determine a first target occasion from the K first occasions.

The sending unit 1710 is configured to send N first beams in the N sending time units of the first target occasion, where the N first beams carry a first sidelink signal, and the first sidelink signal is used for beam training.

Optionally, the processing unit 1720 is specifically configured to: determine at least one unoccupied first occasion from the K first occasions; and determine the first target occasion from the at least one unoccupied first occasion.

Optionally, when the K first occasions include Q occupied first occasions, an overlapping quantity of N sending time units of the first target occasion and an overlapping quantity of N sending time units of any one of the Q occupied first occasions are less than or equal to a first threshold, the first threshold is a positive integer greater than 1 and less than N, Q is a positive integer, and Q is less than K.

Optionally, the processing unit 1720 is specifically configured to: determine an average value of an overlapping quantity of the at least one unoccupied first occasion, where the average value of the overlapping quantity is an average value of an overlapping quantity of sending time units of any unoccupied first occasion in the at least one unoccupied first occasion and overlapping quantities of sending time units of all occupied first occasions; and determine a first occasion corresponding to a minimum value of the average value of the overlapping quantity as the first target occasion.

Optionally, the P time units include M candidate time units, the N sending time units belong to the M candidate time units, P is greater than or equal to M, and M is greater than or equal to N.

Optionally, when M is greater than N, and the N sending time units include continuous sending time units, a quantity of continuous sending time units is less than or equal to a second threshold, and the second threshold is a positive integer greater than 1 and less than N.

Optionally, the sending unit 1710 is specifically configured to send the N first beams in the N sending time units of the first target occasion in a first beam training period; the processing unit 1720 is further configured to determine a second target occasion from the K first occasions, where N sending time units of the second target occasion are different from the N sending time units of the first target occasion; and the sending unit 1710 is further configured to send N second beams in the N sending time units of the second target occasion in a second beam training period, where the N second beams carry a second sidelink signal, and the second sidelink signal is used for beam training.

It may be clearly understood by a person skilled in the art that for a detailed working process of the apparatus 1700 and technical effect generated by execution steps, refer to the descriptions in the foregoing corresponding method embodiment. For brevity, details are not described herein again.

The apparatus 1700 may be a chip. The processing unit 1720 may be implemented by hardware or software. When the processing unit 1720 is implemented by hardware, the processing unit 1720 may be a logical circuit, an integrated circuit, or the like. When the processing unit 1720 is implemented by software, the processing unit 1720 may be a general-purpose processor, and is implemented by reading software code stored in a storage unit. The storage unit may be integrated in the processing unit 1720, or located outside the processing unit 1720 and exist independently.

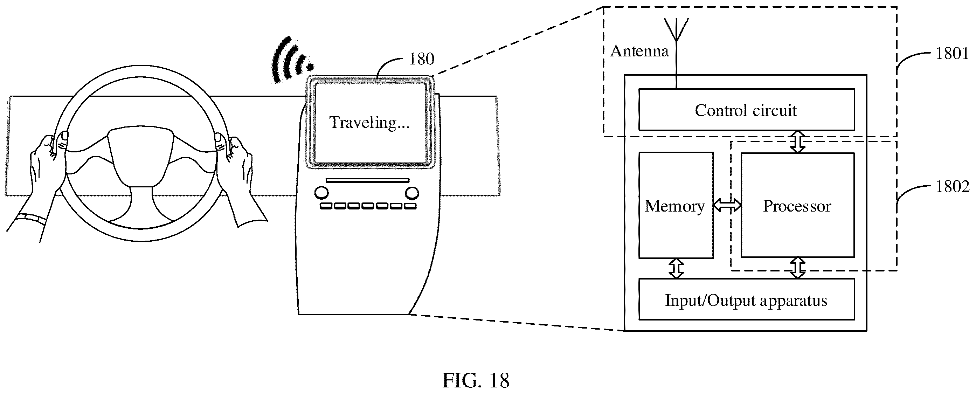

FIG. 18 is a diagram of a structure of a terminal device according to this application. For ease of description, FIG. 18 shows only main components of the terminal device. As shown in FIG. 18, the terminal device 180 includes a processor, a memory, a control circuit, an antenna, and an input/output apparatus. The processor is mainly configured to process a communication protocol and communication data, control the entire terminal device, execute a software program, and process data of the software program, for example, configured to support the terminal device in performing actions described in the foregoing method embodiment. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the memory, explain and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 18 shows only one memory and one processor. In an actual terminal device, there may be a plurality of processors and a plurality of memories. The memory may also be referred to as a storage medium, a storage device, or the like. This is not limited in this application.

In an optional implementation, the processor may include a baseband processor and/or a central processing unit. The baseband processor is mainly configured to process the communication protocol and the communication data. The central processing unit is mainly configured to: control the entire terminal device, execute the software program, and process the data of the software program. Functions of the baseband processor and the central processing unit may be integrated into the processor in FIG. 18. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

In this embodiment of this application, the antenna and the control circuit that have receiving and sending functions may be considered as a transceiver unit 1801 of the terminal device 180, for example, configured to support the terminal device in implementing the receiving function and the sending function in the method embodiment. A processor having a processing function is considered as a processor 1802 of the terminal device 180. The terminal device 180 includes the transceiver unit 1801 and the processor 1802. The transceiver unit 1801 may also be referred to as a transceiver, a transceiver machine, a transceiver apparatus, or the like. Optionally, a device configured to implement the receiving function in the transceiver unit 1801 may be considered as a receiving unit, and a device configured to implement the sending function in the transceiver unit 1801 may be considered as a sending unit. In other words, the transceiver unit 1801 includes the receiving unit and the sending unit. The receiving unit may also be referred to as a receiver, an input port, a receiving circuit, or the like. The sending unit may be referred to as a transmitting machine, a transmitter, a transmitting circuit, or the like. For example, the transceiver unit 1801 may not include an antenna, but includes only a circuit part, and the antenna is disposed outside the transceiver unit.

The processor 1802 may be configured to execute instructions stored in the memory to control the transceiver unit 1801 to receive a signal and/or send a signal, to complete a function of the terminal device in the foregoing method embodiment. In an implementation, a function of the transceiver unit 1801 may be implemented through a transceiver circuit or a transceiver-dedicated chip. When receiving and sending various types of signals, the processor 1802 controls the transceiver unit 1801 to implement the receiving. Therefore, the processor 1802 is a decider of sending or receiving the signal, and initiates a data sending or receiving operation, and the transceiver unit 1801 is an executor of sending or receiving the signal.

It may be understood that, the processor in embodiments of this application may be an integrated circuit chip, and has a signal processing capability. In an implementation process, steps in the foregoing method embodiment can be implemented through a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

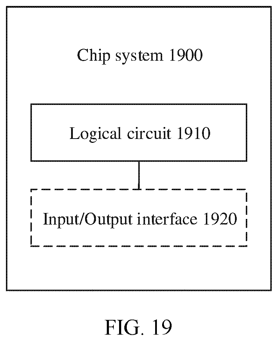

FIG. 19 is a diagram of a chip system according to an embodiment of this application. The chip system herein may alternatively be a system including a circuit. The chip system 1900 shown in FIG. 19 includes a logical circuit 1910 and an input/output interface (input/output interface) 1920. The logical circuit is configured to be coupled to the input interface, and transmit data (for example, first time service configuration information) through the input/output interface, to perform the method in the foregoing method embodiment.

An embodiment of this application further provides a processing apparatus. The apparatus includes a processor and an interface. The processor may be configured to perform the method in the foregoing method embodiment.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing method can be implemented through a hardware integrated logical circuit in the processor, or by using instructions in a form of software. The steps of the method disclosed with reference to embodiments of this application may be directly performed by a hardware processor, or may be performed by using a combination of hardware and software modules in the processor. The software module may be located in a mature storage medium in the art, for example, a random access register, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented through a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A sidelink beam training method, comprising:

   determining K first occasions, wherein each of the K first occasions comprises P time units, the P time units comprise N sending time units, K, P, and N are all positive integers greater than 1, and N is less than or equal to P;
   determining a first target occasion from the K first occasions; and
   sending N first beams in the N sending time units of the first target occasion, wherein the N first beams carry a first sidelink signal, and the first sidelink signal is used for beam training.

2. The method according to claim 1, wherein determining the first target occasion from the K first occasions comprises:

   determining at least one unoccupied first occasion from the K first occasions; and
   determining the first target occasion from the at least one unoccupied first occasion.

3. The method according to claim 2, wherein when the K first occasions comprise Q occupied first occasions, an overlapping quantity of N sending time units of the first target occasion and an overlapping quantity of N sending time units of any one of the Q occupied first occasions are less than or equal to a first threshold, the first threshold is a positive integer greater than 1 and less than N, Q is a positive integer, and Q is less than K.

4. The method according to claim 2 or 3, wherein determining the first target occasion from the at least one unoccupied first occasion comprises:

   determining an average value of an overlapping quantity of the at least one unoccupied first occasion, wherein the average value of the overlapping quantity is an average value of an overlapping quantity of sending time units of any unoccupied first occasion in the at least one unoccupied first occasion and overlapping quantities of sending time units of all occupied first occasions; and

determining a first occasion corresponding to a minimum value of the average value of the overlapping quantity as the first target occasion.

5. The method according to any one of claims 1 to 4, wherein the P time units comprise M candidate time units, the N sending time units belong to the M candidate time units, P is greater than or equal to M, and M is greater than or equal to N.

6. The method according to claim 5, wherein when M is greater than N, and the N sending time units comprise continuous sending time units, a quantity of continuous sending time units is less than or equal to a second threshold, and the second threshold is a positive integer greater than 1 and less than N.

7. The method according to any one of claims 1 to 6, wherein sending the N first beams in the N sending time units of the first target occasion comprises:

sending the N first beams in the N sending time units of the first target occasion in a first beam training period; and the method further comprises:

determining a second target occasion from the K first occasions, wherein N sending time units of the second target occasion are different from the N sending time units of the first target occasion; and sending N second beams in the N sending time units of the second target occasion in a second beam training period, wherein the N second beams carry a second sidelink signal, and the second sidelink signal is used for beam training.

8. A sidelink beam training apparatus, comprising a processing unit and a sending unit, wherein

the processing unit is configured to: determine K first occasions, wherein each of the K first occasions comprises P time units, the P time units comprise N sending time units, K, P, and N are all positive integers greater than 1, and N is less than or equal to P; and determine a first target occasion from the K first occasions; and the sending unit is configured to send N first beams in the N sending time units of the first target occasion, wherein the N first beams carry a first sidelink signal, and the first sidelink signal is used for beam training.

9. The apparatus according to claim 8, wherein the processing unit is specifically configured to:

determine at least one unoccupied first occasion from the K first occasions; and determine the first target occasion from the at least one unoccupied first occasion.

10. The apparatus according to claim 9, wherein when the K first occasions comprise Q occupied first occasions, an overlapping quantity of N sending time units of the first target occasion and an overlapping quantity of N sending time units of any one of the Q occupied first occasions are less than or equal to a first threshold, the first threshold is a positive integer greater than 1 and less than N, Q is a positive integer, and Q is less than K.

11. The apparatus according to claim 9 or 10, wherein the processing unit is specifically configured to:

determine an average value of an overlapping quantity of the at least one unoccupied first occasion, wherein the average value of the overlapping quantity is an average value of an overlapping quantity of sending time units of any unoccupied first occasion in the at least one unoccupied first occasion and overlapping quantities of sending time units of all occupied first occasions; and determine a first occasion corresponding to a minimum value of the average value of the overlapping quantity as the first target occasion.

12. The apparatus according to any one of claims 8 to 11, wherein the P time units comprise M candidate time units, the N sending time units belong to the M candidate time units, P is greater than or equal to M, and M is greater than or equal to N.

13. The apparatus according to claim 12, wherein when M is greater than N, and the N sending time units comprise continuous sending time units, a quantity of continuous sending time units is less than or equal to a second threshold, and the second threshold is a positive integer greater than 1 and less than N.

14. The apparatus according to any one of claims 8 to 13, wherein the sending unit is specifically configured to:

    send the N first beams in the N sending time units of the first target occasion in a first beam training period; the processing unit is further configured to:

        determine a second target occasion from the K first occasions, wherein N sending time units of the second target occasion are different from the N sending time units of the first target occasion; and
        the sending unit is further configured to send N second beams in the N sending time units of the second target occasion in a second beam training period, wherein the N second beams carry a second sidelink signal, and the second sidelink signal is used for beam training.

15. A sidelink beam training apparatus, comprising:

    a processor, configured to execute a computer program stored in a memory, to enable the apparatus to perform the method according to any one of claims 1 to 7; and
    a communication interface, wherein the communication interface is coupled to the processor, and is configured to output information.

16. The apparatus according to claim 15, wherein the apparatus further comprises the memory, and the memory is coupled to the processor.

17. A communication system, comprising the sidelink beam training apparatus configured to perform the method according to any one of claims 1 to 7.

18. A computer-readable storage medium, wherein the computer-readable storage medium stores a computer program; and when the computer program is executed by a processor, the processor is enabled to perform the method according to any one of claims 1 to 7.

19. A computer program product, wherein the computer program product comprises instructions for performing the method according to any one of claims 1 to 7.

FIG. 1

FIG. 2

EP 4 665 040 A1

FIG. 3

A UE-A triggers resource selection

Reevaluation and preemption detection

UE-B (R1)

UE-B

UE-B (R1)

UE-C (R1)

UE-C

UE-C (P)

UE-C (R1)

$n{-}T_0$　　　　$n{-}T_{proc,0}$　　$n$　　$n{+}T_1$　　$m{-}T_3$　　　　　　　$n{+}T_2$

Sensing window

Resource selection window

FIG. 4

EP 4 665 040 A1

| PSBCH (AGC) | S-PSS | S-PSS | S-SSS | S-SSS | PSBCH | PSBCH | PSBCH | PSBCH | PSBCH | PSBCH | PSBCH | PSBCH | GAP |
|---|---|---|---|---|---|---|---|---|---|---|---|---|---|

FIG. 5

FIG. 6

Coarse beam
training

gNB

UE

Fine beam
training

gNB

UE

Receive
beam
training

gNB

UE

FIG. 7

Coarse beam
training

UE-A

UE-B

Fine beam
training

UE-A

UE-B

Receive beam
training

UE-A

UE-B

FIG. 8

FIG. 9

FIG. 10

Scenario 1

Network device

← PC5 →

Terminal device 1

Terminal device 2

Scenario 2

Network device

Terminal device 1

PC5

Terminal device 2

Scenario 3

Network device

← PC5 →

Terminal device 1

Terminal device 2

FIG. 11

Determine K first occasions, where each of the K first occasions includes P time units, the P time units include N sending time units, K, P, and N are all positive integers greater than 1, and N is less than or equal to P — S1210

Determine a first target occasion from the K first occasions — S1220

Send N first beams in the N sending time units of the first target occasion, where the N first beams carry a first sidelink signal, and the first sidelink signal is used for beam training — S1230

FIG. 12

Time

S-SSB

...

S-SSB

S-SSB

...

S-SSB

S-SSB period=16
frames (160 ms)

M=16

S-SSB

...

S-SSB

M=16

S-SSB

...

S-SSB

FIG. 13

Time

S-SSB period=16
frames (160 ms)

S-SSB

...

S-SSB

S-SSB

...

S-SSB

S-SSB

...

S-SSB

N=8

M=16

S-SSB

...

S-SSB

N=8

FIG. 14

Determine a second target occasion from K first occasions, where N sending time units of the second target occasion are different from N sending time units of a first target occasion — S1240

Send N second beams in the N sending time units of the second target occasion in a second beam training period, where the N second beams carry a second sidelink signal, and the second sidelink signal is used for beam training — S1250

FIG. 15

Time pattern 1

Beam training
period n

UE-A

UE-B

Time pattern 3

Beam training
period n+1

UE-A

UE-B

Time pattern 5

Beam training
period n+2

UE-A

UE-B

⋮

FIG. 16

1700

Sidelink beam training apparatus

Sending unit — 1710

Processing unit — 1720

FIG. 17

FIG. 18

Chip system 1900

Logical circuit 1910

Input/Output interface 1920

FIG. 19

## INTERNATIONAL SEARCH REPORT

| International application No. |
| --- |
| **PCT/CN2023/140700** |

| A. | CLASSIFICATION OF SUBJECT MATTER |
| --- | --- |

H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, ENTXT, DWPI, VEN, VCN, CNKI, 3GPP: 时间单元, 时隙, 发送时机, 侧行链路, 旁链路, sidelink, PC5, 波束训练, 波束训练参考信号, CSI-RS, BTRS, slot, beam training

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021114043 A1 (HUAWEI TECHNOLOGIES CO., LTD.) 17 June 2021 (2021-06-17) description, page 11, lines 14-38 | 1, 5, 7, 8, 12, 14-19 |
| A | CN 109981155 A (HUAWEI TECHNOLOGIES CO., LTD.) 05 July 2019 (2019-07-05) entire document | 1-19 |
| A | CN 114449539 A (HUAWEI TECHNOLOGIES CO., LTD.) 06 May 2022 (2022-05-06) entire document | 1-19 |
| A | TW 202123624 A (QUALCOMM INC.) 16 June 2021 (2021-06-16) entire document | 1-19 |
| A | US 2023013069 A1 (QUALCOMM INC.) 19 January 2023 (2023-01-19) entire document | 1-19 |
| A | WO 2021134477 A1 (HUAWEI TECHNOLOGIES CO., LTD.) 08 July 2021 (2021-07-08) entire document | 1-19 |
| A | VIVO. "Discussion on beam management for NR MIMO" *3GPP TSG RAN WG1 AH_NR Meeting, R1-1700274*, 20 January 2017 (2017-01-20), entire document | 1-19 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 February 2024** | **20 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/140700**

| Patent document cited in search report | | | Publication date (day/month/year) | Patent family member(s) | | | Publication date (day/month/year) |
|---|---|---|---|---|---|---|---|
| WO | 2021114043 | A1 | 17 June 2021 | None | | | |
| CN | 109981155 | A | 05 July 2019 | EP | 3709531 | A1 | 16 September 2020 |
| | | | | WO | 2019128873 | A1 | 04 July 2019 |
| | | | | RU | 2020124581 | A | 25 March 2022 |
| | | | | US | 2020322032 | A1 | 08 October 2020 |
| | | | | US | 2022278734 | A1 | 01 September 2022 |
| CN | 114449539 | A | 06 May 2022 | WO | 2022089642 | A1 | 05 May 2022 |
| TW | 202123624 | A | 16 June 2021 | WO | 2021080868 | A1 | 29 April 2021 |
| | | | | US | 2021127381 | A1 | 29 April 2021 |
| US | 2023013069 | A1 | 19 January 2023 | US | 2021333884 | A1 | 28 October 2021 |
| | | | | WO | 2021218486 | A1 | 04 November 2021 |
| | | | | IN | 202247062632 | A | 11 November 2022 |
| | | | | CN | 115427920 | A | 02 December 2022 |
| | | | | KR | 20230002874 | A | 05 January 2023 |
| | | | | BR | 112022021679 | A2 | 17 January 2023 |
| | | | | EP | 4127879 | A1 | 08 February 2023 |
| | | | | JP | 2023522777 | W | 31 May 2023 |
| WO | 2021134477 | A1 | 08 July 2021 | EP | 4061026 | A1 | 21 September 2022 |
| | | | | US | 2022330186 | A1 | 13 October 2022 |
| | | | | CN | 114175694 | A | 11 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310188787